# EUROPEAN PATENT APPLICATION

(11) **EP 4 592 360 A1**
(43) Date of publication of application: **30.07.2025**
(21) Application number: 23868077.1
(22) Date of filing: 08.09.2023
(51) Int. Cl.: C08L 101/08, C08L 57/02, C08L 65/00, H01M 4/13, H01M 4/139, H01M 4/62

(54) **COMPOSITE PARTICLES, BINDER COMPOSITION FOR NON-AQUEOUS SECONDARY BATTERY AND NON-AQUEOUS SECONDARY BATTERY ELECTRODE**

(30) Priority: 22.09.2022 JP 2022151135
(71) Applicant: Resonac Corporation, Tokyo 105-7325 (JP)
(72) Inventor: KAWAHARA Yuta, Tokyo 105-7325 (JP); IKEHATA Ryosuke, Tokyo 105-7325 (JP); HORIKOSHI Hideo, Tokyo 105-7325 (JP); OKUHARA Kenta, Tokyo 105-7325 (JP)
(74) Representative: Strehl & Partner mbB
(86) International application number: PCT/JP2023/032916
(87) International publication number: WO 2024/062954

(57) **Abstract**

Composite particles are provided, including: a copolymer; and a tackifier, in which the copolymer has a first structural unit derived from a monomer (a1) and a second structural unit derived from a monomer (a2), the monomer (a1) is a nonionic compound having only one ethylenically unsaturated bond, and the monomer (a2) is a compound having a carboxy group and only one ethylenically unsaturated bond.

## Description

### TECHNICAL FIELD

The present invention relates to composite particles, a binder composition for non-aqueous secondary batteries, a slurry for non-aqueous secondary battery electrodes, a non-aqueous secondary battery electrode, a non-aqueous secondary battery, and a method for producing composite particles.

Priority is claimed on Japanese Patent Application No. 2022-151135, filed September 22, 2022, the content of which is incorporated herein by reference.

### BACKGROUND ART

Non-aqueous secondary batteries are widely used as power sources for notebook computers, mobile phones, power tools, electronic communication equipment, and the like because they can be made smaller and lighter. In recent years, non-aqueous secondary batteries have been used as power sources for electric vehicles and hybrid vehicles. Typical examples of non-aqueous secondary batteries include lithium ion secondary batteries.

A non-aqueous secondary battery includes a positive electrode using a metal oxide or the like as an active material, a negative electrode using a carbon material such as graphite as an active material, and an electrolyte. The positive and negative electrodes have a current collector and an electrode active material layer formed on the current collector. An electrode active material layer usually contains a binder that binds an active material together and binds an active material to a current collector to fix the electrode active material layer on the current collector.

In the related art, as binders used in non-aqueous secondary batteries, those described in Patent Documents 1 and 2 are known.

Patent Document 1 discloses a binder composition for secondary battery electrodes containing: 100 parts by mass of at least one polymer water dispersion selected from the group consisting of styrene butadiene copolymer latex and an acrylic emulsion; and 1 to 20 parts by mass of a nonionic surfactant.

Patent Document 2 discloses a binder for lithium ion secondary battery electrodes with a glass transition temperature of 30°C or lower which is obtained through emulsion polymerization of an ethylenically unsaturated monomer containing, as essential components, with respect to the total mass of ethylenically unsaturated monomers, 15 to 70 mass% of styrene, an ethylenically unsaturated carboxylic acid ester, an ethylenically unsaturated carboxylic acid, and an internal cross-linking agent in the presence of a surfactant.

In addition, Patent Document 3 discloses a tire puncture sealant containing an acrylic emulsion, an anti-freezing agent, and a tackifier.

Patent Document 4 discloses a water-dispersible acrylic adhesive tape or sheet for transporting electronic components, in which an adhesive layer consisting of an acrylic adhesive mainly composed of an acrylic emulsion polymer is provided. Patent Document 4 discloses an acrylic emulsion polymer obtained through emulsion polymerization of an acrylic monomer mixture containing a carboxyl group-containing monomer. Patent Document 4 also discloses that the above-described acrylic adhesive contains rosin-based or terpene-based tackifiers with a softening point of 100°C or higher.

### Citation List

### Patent Documents

Patent Document 1: Japanese Unexamined Patent Application, First Publication No. 2014-239070
Patent Document 2: Japanese Unexamined Patent Application, First Publication No. 2011-243464
Patent Document 3: Japanese Unexamined Patent Application, First Publication No. 2007-224248
Patent Document 4: Japanese Unexamined Patent Application, First Publication No. 2008-285221

### SUMMARY OF INVENTION

### Technical Problem

In recent years, there has been a strong demand for higher output, higher capacity, longer life and the like in non-aqueous secondary batteries. For binders used in non-aqueous secondary batteries, there is a demand for binders that can improve the cycle characteristics of non-aqueous secondary batteries with electrodes using these binders.

The present invention has been made in view of the above-described circumstances, and an object of the present invention is to provide composite particles that can be used as a material for a binder that can form an electrode from which a non-aqueous secondary battery with excellent cycle characteristics can be obtained, and a method for producing composite particles.

In addition, another object of the present invention is to provide a binder composition for non-aqueous secondary batteries and a slurry for non-aqueous secondary battery electrodes that contain composite particles of the present invention and can form an electrode from which a non-aqueous secondary battery with excellent cycle characteristics can be obtained and a non-aqueous secondary battery electrode from which a non-aqueous secondary battery with excellent cycle characteristics can be obtained, and a non-aqueous secondary battery including the electrode.

### Solution to Problem

The present invention has the following aspects.

A first aspect of the present invention provides the following composite particles.
[1] Composite particles including: a copolymer; and a tackifier, in which the copolymer has a first structural unit derived from a monomer (a1) and a second structural unit derived from a monomer (a2), the monomer (a1) is a nonionic compound having only one ethylenically unsaturated bond, and the monomer (a2) is a compound having a carboxy group and only one ethylenically unsaturated bond.
   The composite particles of the first aspect of the present invention preferably include features described in [2] to [10] below. It is also preferable to arbitrarily combine two or more of the features described in [2] to [10] below.
[2] The composite particles according to [1] in which at least a part of the tackifier is present within a particulate structure consisting of chain molecules of the copolymer.
[3] The composite particles according to [1] or [2], in which the tackifier is at least one kind selected from a hydrogenated petroleum resin and a terpene-based resin.
[4] The composite particles according to [3], in which the tackifier includes the hydrogenated petroleum resin.
[5] The composite particles according to [4], in which the softening point of the hydrogenated petroleum resin is 70°C to 140°C.
[6] The composite particles according to any one of [1] to [5], in which the content of the tackifier based on 100 parts by mass of monomer components used for producing the copolymer is 0.50 parts by mass to 20 parts by mass.
[7] The composite particles according to any one of [1] to [6], in which the content of the second structural unit in all structural units of the copolymer is 0.10 mass% to 20 mass%.
[8] The composite particles according to any one of [1] to [7], in which the copolymer has a third structural unit derived from a monomer (a3), and the monomer (a3) is a compound having a plurality of independent ethylenically unsaturated bonds.
[9] The composite particles according to [8], in which the content of the third structural unit in all structural units of the copolymer is 0.010 mass% to 10 mass%.
[10] The composite particles according to any one of [1] to [9], wherein the composite particles are used as a binder for non-aqueous secondary batteries.
   A second aspect of the present invention provides a binder composition for non-aqueous secondary batteries below.
[11] A binder composition for non-aqueous secondary batteries, including: the composite particles according to any one of [1] to [9]; and an aqueous medium.
   A third aspect of the present invention provides a slurry for non-aqueous secondary battery electrodes below.
[12] A slurry for non-aqueous secondary battery electrodes, including: the composite particles according to any one of [1] to [9]; an electrode active material; and an aqueous medium, in which the aqueous medium is one selected from the group consisting of water, a hydrophilic solvent, and a mixture containing water and the hydrophilic solvent.
   A fourth aspect of the present invention provides a non-aqueous secondary battery electrode below.
[13] A non-aqueous secondary battery electrode, including: the composite particles according to any one of [1] to [9].
   A fifth aspect of the present invention provides a non-aqueous secondary battery below.
[14] A non-aqueous secondary battery, including: the non-aqueous secondary battery electrode according to [13].
   A sixth aspect of the present invention provides the following method for producing composite particles.
[15] A method for producing composite particles, including: a polymerization step of copolymerizing a raw material monomer (a) containing a monomer (a1) and a monomer (a2) in the presence of a tackifier, in which the monomer (a1) is a nonionic compound having only one ethylenically unsaturated bond, and the monomer (a2) is a compound having a carboxy group and only one ethylenically unsaturated bond. Advantageous Effects of Invention

According to the present invention, it is possible to provide composite particles that can be used as a material for a binder that can form an electrode from which a non-aqueous secondary battery with excellent cycle characteristics can be obtained, and a production method for the same.

Furthermore, according to the present invention, it is possible to provide a binder composition for non-aqueous secondary batteries and a slurry for non-aqueous secondary battery electrodes that can form an electrode from which a non-aqueous secondary battery with excellent cycle characteristics can be obtained.

According to the present invention, it is possible to provide a non-aqueous secondary battery electrode from which a non-aqueous secondary battery with excellent cycle characteristics can be obtained, and a non-aqueous secondary battery which includes the electrode and has excellent cycle characteristics.

### BRIEF DESCRIPTION OF DRAWINGS

[FIG. 1] A schematic view illustrating a state of a composition containing an aqueous medium and composite particles which contained a tackifier and were obtained through a production method of the present embodiment.
[FIG. 2] A schematic view illustrating a state of a composition containing an aqueous medium and other composite particles which contained a tackifier and were obtained through a production method of the present embodiment.
[FIG. 3] A comparative schematic view illustrating a state of a composition containing copolymer particles, a tackifier located apart from the copolymer particles, and an aqueous medium.

### DESCRIPTION OF EMBODIMENT

To solve the above-described problems and realize a binder that can form a non-aqueous secondary battery electrode from which a non-aqueous secondary battery with excellent cycle characteristics can be obtained, the present inventors have focused on a tackifier and a copolymer obtained by copolymerizing a monomer (a1) consisting of a nonionic compound having only one ethylenically unsaturated bond and a monomer (a2) consisting of a compound having an anionic functional group and only one ethylenically unsaturated bond, and have conducted extensive studies on a binder material containing the tackifier and the copolymer.

As a result, it has been found that composite particles containing a tackifier and a copolymer obtained by copolymerizing monomers including the monomer (a1) and the monomer (a2) may be used as a binder for non-aqueous secondary batteries. When electrodes are formed using such a binder for non-aqueous secondary batteries, composite particles between electrode active materials and between an electrode active material and a current collector contain a copolymer and a tackifier. Therefore, a synergistic effect of the copolymer and the tackifier is sufficiently exhibited, and the electrodes have favorable binding properties between electrode active materials and between an electrode active material and a current collector. As a result, it is speculated that non-aqueous secondary battery electrodes and non-aqueous secondary batteries with excellent cycle characteristics could be obtained.

Furthermore, the present inventors manufactured electrodes using the above-described composite particles as a binder for non-aqueous secondary batteries, and confirmed that non-aqueous secondary batteries with these electrodes have excellent cycle characteristics, thus leading to realization of the present invention.

Hereinafter, composite particles, a binder composition for non-aqueous secondary batteries, a slurry for non-aqueous secondary battery electrodes, a non-aqueous secondary battery electrode, a non-aqueous secondary battery, and a method for producing composite particles of the present invention will be described in detail. The present invention is not limited to only the embodiment shown below. For example, numbers, amount, positions, ratios, materials, configurations, types, and orders in the present invention can be added, omitted, replaced, or modified within the scope not departing from the gist of the present invention.

The following words and phrases used in the present specification will be described.

The term "(meth)acrylic" is a generic term for acrylic and methacrylic. The term "(meth)acrylate" is a generic term for acrylate and methacrylate. The term "ethylenically unsaturated bond" refers to an ethylenically unsaturated bond with radical polymerizability, unless otherwise specified.

In a polymer using a compound having an ethylenically unsaturated bond, a structural unit derived from the compound having an ethylenically unsaturated bond means a structural unit in which the chemical structure of a portion other than the ethylenically unsaturated bond in the compound having an ethylenically unsaturated bond is the same as the chemical structure of a portion other than the portion corresponding to the ethylenically unsaturated bond of the structural unit in the polymer. The ethylenically unsaturated bond of the compound changes to a single bond when forming the polymer. For example, in a polymer of methyl methacrylate, a structural unit derived from methyl methacrylate is represented by -CH₂-C(CH₃)(COOCH₃)-.

In the case of a polymer of a compound having an ionic functional group and an ethylenically unsaturated bond, structural units having an ionic functional group, such as a carboxy group, such as, for example, the second structural unit shown below, are considered to be structural units derived from the same ionic compound, regardless of whether or not some of the functional groups have undergone ion exchange. For example, a structural unit represented by -CH₂-C(CH₃)(COONa)- may also be considered to be a structural unit derived from methacrylic acid.

For compounds having a plurality of independent ethylenically unsaturated bonds, one or more ethylenically unsaturated bonds may remain inside the structural unit as the structural unit of the polymer of the compound. For example, in a case of a polymer of divinylbenzene, the structural unit derived from divinylbenzene may have a structure without an ethylenically unsaturated bond (a form in which portions corresponding to two ethylenically unsaturated bonds of divinylbenzene are both incorporated into a polymer chain) or a structure with one ethylenically unsaturated bond (a form in which only a portion corresponding to one ethylenically unsaturated bond is incorporated into a polymer chain). Here, a plurality of independent ethylenically unsaturated bonds mean a plurality of ethylenically unsaturated bonds that do not form conjugated dienes together.

Furthermore, if, after polymerization, the portion other than the chain structure corresponding to the ethylenically unsaturated bond in the polymer, such as a functional group such as a carboxy group, no longer corresponds to the chemical structure of a monomer due to a chemical reaction, the structural unit of the polymer is considered as a unit derived from a compound with the ethylenically unsaturated bond in the polymer. For example, in a case where vinyl acetate is polymerized and then saponified, the structural unit of the polymer is considered based on the chemical structure in the polymer, and the structural unit of the polymer is regarded as a structural unit derived from vinyl alcohol rather than a structural unit derived from vinyl acetate.

In the present embodiment, the term "type" assigned to a compound name means a compound group containing the compound structure and also includes the compound having a substituent.

### <1. Composite particles (P)>

In one aspect, composite particles (P) of the present embodiment may be used as a binder for non-aqueous secondary batteries. The composite particles (P) of the present embodiment contain a copolymer and a tackifier. In the composite particles (P) of the present embodiment, chain molecules of the copolymer are inferred to form a particle structure. The shape of the particle structure may be, for example, spherical or substantially spherical, and the molecular weight of the chain molecules is arbitrarily selected. The composite particles (P) may be particles that have been emulsified and polymerized. The tackifier molecules may be present on either one or both of the surface of the particle structure and the interior of the particle structure, and at least some of the tackifier is preferably present within the particulate structure consisting of the chain molecules of the copolymer. The reason for this is that, for example, compared to the case where all of the tackifier contained in the composite particles (P) is attached to the outer surface of the particulate structure, an interaction between the tackifier and the chain molecules is promoted and the synergistic effect of the copolymer and the tackifier is more easily exhibited when at least some of the tackifier is present within the particulate structure. As a result, the composite particles (P) can form electrodes with better binding properties between electrode active materials and between an electrode active material and a current collector.

### (Copolymer)

The copolymer contained in the composite particles (P) of the present embodiment has at least a first structural unit derived from a monomer (a1) shown below and a second structural unit derived from a monomer (a2) shown below.

In addition to the first structural unit and the second structural unit, the copolymer contained in the composite particles (P) of the present embodiment may contain a third structural unit which does not correspond to the monomer (a1) or the monomer (a2) and is derived from a monomer (a3) consisting of a compound having a plurality of independent ethylenically unsaturated bonds and/or a fourth structural unit which does not correspond to any of the monomers (a1) to (a3) and is derived from other monomer (a4).

### [First structural unit]

The first structural unit in the copolymer contained in the composite particles (P) of the present embodiment is derived from the monomer (a1).

The monomer (a1) is a nonionic compound having only one ethylenically unsaturated bond. In other words, the monomer (a1) is a compound that has neither an anionic functional group nor a cationic functional group. However, a silane compound is not considered as the monomer (a1). The monomer (a1) may be only one compound or may be a combination of two or more compounds.

As the monomer (a1), at least one of a (meth)acrylic acid ester and an aromatic compound having an ethylenically unsaturated bond is preferably used, and a combination of both compounds is more preferably used. A (meth)acrylic acid alkyl ester is more preferable as the (meth)acrylic acid ester. The number of carbon atoms of the alkyl group in the (meth)acrylic acid alkyl ester is preferably 1 to 20. When using such compounds, the monomer (a1) other than (meth)acrylic acid alkyl esters and aromatic compounds having ethylenically unsaturated bonds, as will be described below, may be used in combination.

Examples of (meth)acrylic acid alkyl esters included in examples of (meth)acrylic acid esters used in the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, and stearyl (meth)acrylate. Among these, 2-ethylhexyl acrylate is preferably contained since this results in composite particles (P) that can form an electrode active material layer with excellent electrolyte resistance.

Examples of aromatic compounds having ethylenically unsaturated bonds used in the monomer (a1) include styrene, t-butylstyrene, α-methylstyrene, p-methylstyrene, and 1,1-diphenylethylene. When an aromatic vinyl compound is included as the monomer (a1), at least one of styrene and α-methylstyrene is more preferably included. Styrene is still more preferably included because a non-aqueous secondary battery including an electrode containing a binder for non-aqueous secondary batteries which has excellent dispersibility in an aqueous medium and contains composite particles (P) has superior cycle characteristics.

Examples of the monomer (a1) other than the (meth)acrylic acid alkyl esters and the aromatic compounds having ethylenically unsaturated bonds include compounds having an ethylenically unsaturated bond and a polar functional group, aliphatic hydrocarbon compounds having an ethylenically unsaturated bond, and alicyclic hydrocarbon compounds having an ethylenically unsaturated bond.

The polar functional groups in the compounds having an ethylenically unsaturated bond and a polar functional group used as the monomer (a1) preferably include at least one of a hydroxy group and a cyano group and more preferably include a hydroxy group.

Examples of compounds having an ethylenically unsaturated bond and a polar functional group used as the monomer (a1) include 2-hydroxyethyl (meth)acrylate, 2-hydroxypropyl (meth)acrylate, and (meth)acrylonitrile. 2-Hydroxyethyl methacrylate is preferably contained because it provides favorable polymerization stability when producing the composite particles (P).

### [Second structural unit]

The second structural unit in the copolymer contained in the composite particles (P) of the present embodiment is derived from the monomer (a2).

The monomer (a2) is a compound having only one ethylenically unsaturated bond and at least one carboxy group. The monomer (a2) may be only one type of compound or may be a combination of two or more types of compounds.

As the monomer (a2), a compound having two or more carboxy groups in one molecule may be used. The copolymer may contain a plurality of carboxy groups in one structural unit.

Examples of the monomer (a2) having a carboxy group include unsaturated monocarboxylic acids such as methacrylic acid, acrylic acid, and crotonic acid; unsaturated dicarboxylic acids such as itaconic acid and fumaric acid. Among these, at least one of acrylic acid, methacrylic acid, and itaconic acid is preferably used as the monomer (a2) since any of these results in composite particles (P) that can form electrodes with favorable binding properties between electrode active materials and between an electrode active material and a current collector.

At least some structural units derived from monomers (a2) may form salts with basic substances. Examples of monomers (a2) forming salts include metal salts and ammonium salts of the monomers (a2). Examples of metals of metal salts include alkali metals such as lithium, sodium, and potassium. Specific examples of compounds include lithium (meth)acrylate, lithium itaconate, dilithium itaconate, sodium (meth)acrylate, sodium itaconate, disodium itaconate, ammonium (meth)acrylate, ammonium itaconate, and diammonium itaconate.

### [Third structural unit]

The copolymer contained in the composite particles (P) of the present embodiment may have a third structural unit as an arbitrary structural unit. The third structural unit is derived from the monomer (a3). The monomer (a3) is a compound having two or more independent ethylenically unsaturated bonds. The number of ethylenically unsaturated bonds can be selected arbitrarily, and may be, for example, 2 to 10, 3 to 8, or 4 to 6. The term "independent" means that the ethylenically unsaturated bond is not a conjugated double bond such as those included in 1,3-butadiene. Therefore, the monomer (a3) is a compound capable of forming a cross-linked structure by radical polymerization with the monomer (a1) and the monomer (a2). The monomer (a3) does not correspond to either the monomer (a1) or the monomer (a2). As the monomer (a3), only one type of compound may be used or two or more different types of compounds may be used.

Examples of the monomer (a3) include compounds having two ethylenically unsaturated bonds such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds such as trimethylolpropane tri(meth)acrylate. At least one of divinylbenzene and trimethylolpropane triacrylate is preferably used as the monomer (a3), since either results in favorable polymerization stability when producing the composite particles (P) and a non-aqueous secondary battery including an electrode containing a binder for non-aqueous secondary batteries containing the composite particles (P) has lower internal resistance and excellent cycle characteristics.

### [Other monomer (a4)]

Other monomer (a4) is a monomer that does not correspond to any of the monomers (a1) to (a3). Examples of the other monomer (a4) include, but are not limited to, compounds having only one ethylenically unsaturated bond and an anionic functional group other than a carboxy group such as a sulfo group or a phosphate group, surfactants having an ethylenically unsaturated bond (hereinafter referred to as "polymerizable surfactants"), and compounds having an ethylenically unsaturated bond and having a function as a silane coupling agent.

Examples of compounds having only one ethylenically unsaturated bond and a sulfo group include aromatic vinyl compounds having a sulfo group and aromatic vinyl compounds having a sulfo group forming a salt. Of these, at least one of para-styrenesulfonic acid and para-styrenesulfonate is preferably used, and para-styrenesulfonate is more preferably used. Sodium para-styrenesulfonate is still more preferably used because it provides favorable polymerization stability when producing the composite particles (P).

As a polymerizable surfactant that is an example of the other monomer (a4), a compound having an ethylenically unsaturated bond and functioning as a surfactant can be used.

Examples of the above-described polymerizable surfactants include compounds represented by Chemical Formulae (1) to (4) below.

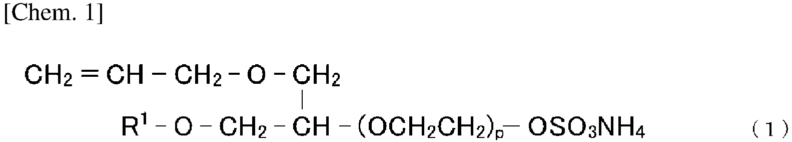

In Formula (1), R¹ is an alkyl group. p is an integer of 10 to 40. R¹ is preferably a C10-40 alkyl group, and more preferably a C10-40 linear unsubstituted alkyl group.

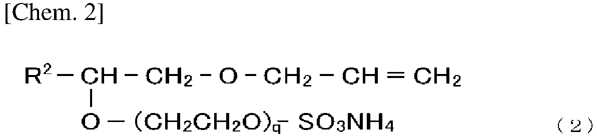

In Formula (2), R² is an alkyl group. q is an integer of 10 to 12. R² is preferably a C10-40 alkyl group, and more preferably a C10-40 linear unsubstituted alkyl group. Examples of compounds represented by Formula (4) include polyoxyethylene alkyl ether sulfate ester salts (manufactured by Dai-Ichi Kogyo Seiyaku Co., Ltd., Aquaron KH-10).

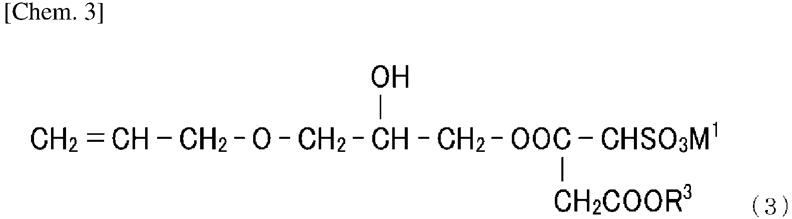

In Formula (3), R³ is an alkyl group. M¹ is NH₄ or Na. R³ is preferably a C10-40 alkyl group, and more preferably a C10-40 linear unsubstituted alkyl group.

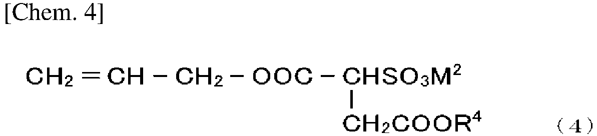

In Formula (4), R⁴ is an alkyl group. M² is NH₄ or Na. R⁴ is preferably a C10-40 alkyl group, and more preferably a C10-40 linear unsubstituted alkyl group.

Examples of the compounds having an ethylenically unsaturated bond and having a function as a silane coupling agent, which is an example of the other monomer (a4), include vinyltrimethoxysilane, γ-methacryloxypropyltrimethoxysilane, vinyltriethoxysilane, and γ-methacryloxypropyltriethoxysilane.

### [Content of each structural unit in copolymer]

The content of each structural unit in the copolymer contained in the composite particles (P) of the present embodiment is considered to be the same as the content of each monomer in the total amount of monomer components used for producing the composite particles (P).

### (Content of first structural unit in all structural units)

The content of the first structural unit in all structural units of the copolymer (in other words, the content of the monomer (a1) in the total amount of monomer components used for producing the composite particles (P)) is preferably 60 mass% or more, more preferably 70 mass% or more, still more preferably 75 mass% or more, and particularly preferably 80 mass% or more. This is because better polymerization stability is obtained when producing the composite particles (P). The content of the first structural unit in all structural units is preferably 97 mass% or less, more preferably 95 mass% or less, and still more preferably 94 mass% or less. This is because the composite particles (P) can be obtained which can form electrodes with favorable binding properties between electrode active materials and between an electrode active material and a current collector.

For the composition of the monomer (a1), it is preferable to appropriately adjust the types and amounts of compounds to adjust the glass transition point of the composite particles (P) or adjust the polymerization rate according to the molecular design.

Specifically, when the monomer (a1) contains an aromatic compound having an ethylenically unsaturated bond, the content of a structural unit derived from the aromatic compound having an ethylenically unsaturated bond in all structural units is preferably 36 mass% or more, more preferably 41 mass% or more, and still more preferably 43 mass% or more. This is because the composite particles (P) can be obtained which can have excellent dispersibility when producing a binder composition for non-aqueous secondary batteries containing the composite particles (P).

### (Content of second structural unit in all structural units)

The content of the second structural unit in all structural units of the copolymer (in other words, the content of the monomer (a2) in the total amount of monomer components used for producing the composite particles (P)) is preferably 0.10 mass% or more, more preferably 1.0 mass% or more, still more preferably 3.0 mass% or more, and particularly preferably 4.0 mass% or more. This is because the composite particles (P) can be obtained which can form electrodes with better binding properties between electrode active materials and between an electrode active material and a current collector. The content of the second structural unit in all structural units is preferably 20 mass% or less, more preferably 15 mass% or less, and still more preferably 10 mass% or less. This is because better polymerization stability is obtained when producing the composite particles (P).

### (Content of third structural unit in all structural units)

When the copolymer contained in the composite particles (P) of the present embodiment contains the third structural unit, the content of the third structural unit in all structural units of the copolymer (that is, the content of the monomer (a3) in the total amount of monomer components used for producing the composite particles (P)) is preferably 0.010 mass% or more, more preferably 0.020 mass% or more, and more preferably 0.030 mass% or more. This is because the effect of the monomer (a3) as an internal cross-linking agent is significant, and degradation of the copolymer is suppressed, making the composite particles (P) usable as a material for binders that can produce non-aqueous secondary batteries with superior cycle characteristics. The content of the third structural unit in all structural units of the copolymer is preferably 10 mass% or less, more preferably 5.0 mass% or less, still more preferably 1.0 mass% or less, and particularly preferably 0.1 mass% or less. This is because gelation of the copolymer can be suppressed.

### (Content of fourth structural unit in all structural units)

When the copolymer contained in the composite particles (P) of the present embodiment contains a fourth structural unit derived from the other monomer (a4) and the other monomer (a4) is a compound having only one ethylenically unsaturated bond and a sulfo group, the content of the fourth structural unit in all structural units of the copolymer (in other words, the content of the monomer (a4) in the total amount of monomer components used for producing the composite particles (P)) is preferably 0.10 mass% or more, more preferably 0.20 mass% or more, and still more preferably 0.30 mass% or more. This is because favorable polymerization stability is obtained when producing the composite particles (P). The content of the fourth structural unit in all structural units of the copolymer is preferably 5.0 mass% or less, more preferably 3.0 mass% or less, and still more preferably 1.0 mass% or less. This is because the particle diameter, the viscosity, and the like of the composite particles (P) can be appropriately adjusted.

When the copolymer of the present embodiment contains the fourth structural unit derived from the other monomer (a4) and the other monomer (a4) is a polymerizable surfactant, the content of the fourth structural unit in all structural units of the copolymer (in other words, the content of the monomer (a4) in the total amount of monomer components used for producing the composite particles (P)) is preferably 0.10 mass% or more, more preferably 0.20 mass% or more, and still more preferably 0.30 mass% or more. This is because the effect of incorporating a polymerizable surfactant is significant and favorable polymerization stability is obtained when producing the composite particles (P). The content of the fourth structural unit in all structural units of the copolymer is preferably 5.0 mass% or less, more preferably 3.0 mass% or less, and still more preferably 1.0 mass% or less. This is because the particle diameter, the viscosity, and the like of the composite particles (P) can be appropriately adjusted.

### (Tackifier)

The type of tackifier contained in the composite particles (P) of the present embodiment is not particularly limited, as long as it does not interfere with the effect of the present invention. Only one tackifier may be used alone or a combination of two or more thereof may be used.

Examples of tackifiers include natural resins such as rosin-based resins and terpene-based resins; and petroleum resins such as hydrogenated petroleum resins and non-hydrogenated petroleum resins. Due to their excellent compatibility with the copolymer in the composite particles of the present embodiment, at least one selected from a rosin-based resin, a terpene-based resin, and a hydrogenated petroleum resin is preferable, and at least one selected from a terpene-based resin and a hydrogenated petroleum resin is more preferable.

Examples of rosin-based resins include rosin resins such as gum rosin, tall oil rosin, and wood rosin; modified rosin resins such as a hydrogenated rosin resin, a disproportionated rosin resin, and a polymerized rosin resin; and rosin ester resins such as pentaerythritol esters and glycerol esters of these rosin resins and modified rosin resins. The rosin-based resins may also be in the form of emulsions obtained by emulsifying them.

Examples of terpene-based resins include terpene resins which are mainly composed of α-pinene, β-pinene, and dipentene, aromatic modified terpene resins, hydrogenated terpene resins, and terpene phenol resins. The terpene-based resins may also be in the form of emulsions obtained by emulsifying them.

As petroleum resins, petroleum resins which have been hydrogenated (hereinafter also referred to as "hydrogenated petroleum resins") may be used, or non-hydrogenated petroleum resins may be used. Due to their favorable compatibility with the copolymer, hydrogenated petroleum resins are preferably used. Examples of petroleum resins include aliphatic (C5) petroleum resins, aromatic (C9) petroleum resins, copolymerized (C5/C9) petroleum resins, dicyclopentadiene petroleum resins, and alicyclic saturated hydrocarbon resins. Hydrogenated petroleum resins are those in which at least some unsaturated groups present in these resins are hydrogenated. The petroleum resins may be in the form of emulsions obtained by emulsifying them. Among these petroleum resins, alicyclic saturated hydrocarbon resins are preferable since these result in composite particles (P) that can form electrodes with better binding properties between electrode active materials and between an electrode active material and a current collector.

The softening point of a tackifier is not particularly limited. For example, the softening point of a tackifier is preferably 25°C to 200°C, more preferably 25°C to 175°C, and still more preferably 25°C to 150°C. The softening point thereof may be, for example, 35°C to 130°C, 50°C to 100°C, or 60°C to 80°C. A softening point of 25°C or higher for a tackifier is preferable because it improves compatibility with the copolymer. When the softening point of a tackifier is 200°C or lower, composite particles (P) can be obtained which can form electrodes with better binding properties between electrode active materials and between an electrode active material and a current collector. As a result, non-aqueous secondary batteries including electrodes using these composite particles will exhibit superior cycle characteristics.

For example, when the tackifier is a hydrogenated petroleum resin, the softening point of the tackifier is preferably 70°C to 140°C, more preferably 80°C to 140°C, still more preferably 85°C to 135°C, and particularly preferably 90°C to 130°C. A softening point of 70°C or higher for hydrogenated petroleum resins is preferable because it improves compatibility with the copolymer. When the softening point of hydrogenated petroleum resins is 140°C or lower, composite particles (P) can be obtained which can form electrodes with better binding properties between electrode active materials and between an electrode active material and a current collector.

The softening point of a tackifier is a value measured using a ring and ball softening point measurement device in accordance with JIS K6220-1:2001.

### [Content of tackifier in composite particles (P)]

The content of a tackifier with respect to the amount of copolymer in the composite particles (P) of the present embodiment is considered to be the same as the mass of the tackifier with respect to the total mass of the monomer components used for producing the composite particles (P).

The content of the tackifier based on 100 parts by mass of the monomer components used for producing the copolymer in the composite particles (P) of the present embodiment is preferably 0.50 to 20 parts by mass, more preferably 0.70 to 18 parts by mass, and still more preferably 1.0 to 15 parts by mass. The content thereof may be 1.5 to 10 parts by mass, 2.0 to 8.0 parts by mass, or 3.0 to 6.0 parts by mass. When the content of the tackifier is 0.50 parts by mass or more, the effect of the composite particles (P) containing the tackifier is significant. As a result, the composite particles (P) can be formed which can form electrodes with better binding properties between electrode active materials and between an electrode active material and a current collector. When the content of the tackifier is 20 parts by mass or less, the content of the copolymer in the composite particles (P) can be sufficiently secured, and the non-aqueous secondary battery including an electrode containing a binder for non-aqueous secondary batteries containing the composite particles (P) will have lower internal resistance.

### [Glass transition temperature (Tg) of composite particles (P)]

The glass transition temperature (Tg) of the composite particles (P) of the present embodiment is the peak top temperature of a DDSC chart obtained as the temperature derivative of DSC through DSC measurement using a differential scanning calorimetry (DSC) device (manufactured by Hitachi High-Tech Corporation, EXSTAR DSC/SS7020) at a temperature increase rate of 10°C/min in a nitrogen gas atmosphere.

The glass transition temperature (Tg) of the composite particles (P) is preferably -30°C or higher, more preferably -20°C or higher, and still more preferably - 10°C or higher. This is because the non-aqueous secondary battery including an electrode containing a binder for non-aqueous secondary batteries containing the composite particles (P) has excellent cycle characteristics.

The glass transition temperature (Tg) of the composite particles (P) is preferably 100°C or lower, more preferably 50°C or lower, and still more preferably 40°C or lower. This is because the film formability of the composite particles (P) is improved and the non-aqueous secondary battery including an electrode containing a binder for non-aqueous secondary batteries containing the composite particles (P) has excellent cycle characteristics. The glass transition temperature (Tg) of the composite particles (P) may be, for example, -20°C to 60°C, -5°C to 30°C, 0°C to 25°C, and 5°C to 20°C, as necessary.

### [Method for producing composite particles (P)]

The composite particles (P) of the present embodiment can be produced through, for example, the following method.

The composite particles (P) can be produced by copolymerizing a raw material monomer containing a monomer (a1) and a monomer (a2), and as necessary, a monomer (a3) consisting of a compound having a plurality of independent ethylenically unsaturated bonds and/or the other monomer (a4) in the presence of a tackifier (polymerization step). Hereinafter, monomers (components of (a1) to (a4)) used to synthesize the composite particles (P) are sometimes collectively referred to as a raw material monomer (a). The raw material monomer (a) may be a mixture containing the monomer (a1) and the monomer (a2) and, if necessary, further containing the monomer (a3) and/or the monomer (a4). The method for producing composite particles (P) may have a step of adding the monomers or a tackifier to an aqueous medium before the copolymerization step.

Examples of the method for copolymerizing the raw material monomer (a) in the presence of a tackifier include an emulsion polymerization method in which the raw material monomer (a) is emulsified and polymerized in an aqueous medium (b) containing a tackifier. When producing the composite particles (P) through an emulsion polymerization method, components such as a surfactant (c) having no polymerizability, a basic substance (d), a radical polymerization initiator (e), and/or a chain transfer agent (f) can be used as necessary in addition to the tackifier, the raw material monomer (a), and the aqueous medium (b). Specific examples thereof include a method wherein a mixture containing a tackifier, the raw material monomer (a), and the aqueous medium (b) is prepared, and this mixture and the radical polymerization initiator (e) are continuously supplied into a separately prepared aqueous medium (b) to perform copolymerization.

### [Aqueous medium (b)]

An aqueous medium (b) is one selected from the group consisting of water, a hydrophilic solvent, and a mixture containing water and a hydrophilic solvent. Examples of hydrophilic solvents include methanol, ethanol, isopropyl alcohol, and N-methylpyrrolidone. The aqueous medium (b) is preferably water from the viewpoint of polymerization stability. As the aqueous medium (b), a mixture of water with a hydrophilic solvent may be used, as long as the polymerization stability is not impaired.

### [Surfactant (c) having no polymerizability]

When producing the composite particles (P) through an emulsion polymerization method, the surfactant (c) having no polymerizability may be incorporated into a solution containing a tackifier, the aqueous medium (b), and the raw material monomer (a) for emulsion polymerization. The surfactant (c) without polymerizability is a surfactant (c) having no polymerizable unsaturated bond in its chemical structure. The surfactant (c) improves dispersion stability of a solution during emulsion polymerization and/or a dispersion (emulsion) obtained after polymerization. As a preferred surfactant (c), an anionic surfactant or a nonionic surfactant may be used.

Examples of anionic surfactants include alkyl benzene sulfonates, alkyl sulfate ester salts, polyoxyethylene alkyl ether sulfate ester salts, and fatty acid salts.

Examples of nonionic surfactants include polyoxyethylene alkyl ethers, polyoxyethylene alkyl phenyl ethers, polyoxyethylene polycyclic phenyl ethers, polyoxyalkylene alkyl ethers, sorbitan fatty acid esters, polyoxyethylene sorbitan fatty acid esters.

The above-described surfactant (c) may be used alone or in a combination of two or more thereof.

### [Basic substance (d)]

When composite particles (P) are produced through an emulsion polymerization method, a basic substance (d) may be added to a solution before emulsion polymerization containing a tackifier, the aqueous medium (b), and the raw material monomer (a) and/or a dispersion after emulsion polymerization. The basic substance (d) may be added to a dispersion undergoing emulsion polymerization. The addition of the basic substance (d) neutralizes acidic components contained in the raw material monomer (a). As a result, the pH of the solution during emulsion polymerization and/or the dispersion after emulsion polymerization falls within an appropriate range, and the stability of the solution during emulsion polymerization and/or the dispersion after emulsion polymerization becomes favorable.

Examples of the basic substance (d) that can be added to a solution before emulsion polymerization and/or a dispersion after emulsion polymerization include ammonia, triethylamine, sodium hydroxide, and lithium hydroxide. These basic substances (d) may be used alone or in a combination of two or more thereof.

### [Radical polymerization initiator (e)]

The radical polymerization initiator (e) used when producing the composite particles (P) through an emulsion polymerization method is not particularly limited, and well-known ones can be used. Examples of the radical polymerization initiator (e) include persulfates such as ammonium persulfate and potassium persulfate; hydrogen peroxide; azo compounds; and organic peroxides such as tert-butyl hydroperoxide, tert-butyl peroxybenzoate, and cumene hydroperoxide. The radical polymerization initiator (e) may be used in the form of an aqueous solution.

In the present embodiment, when producing the composite particles (P) through an emulsion polymerization method, a reducing agent such as sodium bisulfite, rongalite, or ascorbic acid may be used in combination with the radical polymerization initiator (e) for redox polymerization.

The amount of radical polymerization initiator (e) added (including a reducing agent when used in combination) is preferably 0.001 parts by mass or more and more preferably 0.002 parts by mass or more based on 100 parts by mass of the raw material monomer (a). This is because the conversion rate of the raw material monomer (a) to the composite particles (P) can be increased when producing the composite particles (P) through an emulsion polymerization method. The amount of radical polymerization initiator (e) added is preferably 10 parts by mass or less and more preferably 5 parts by mass or less based on 100 parts by mass of the raw material monomer (a). This is because the molecular weight of the copolymer contained in the composite particles (P) can be increased and the swelling ratio of the non-aqueous secondary battery electrode containing the composite particles (P) of the present embodiment with respect to an electrolyte can be lowered. The amount of radical polymerization initiator (e) added may be 0.1 parts by mass to 7.0 parts by mass, 0.5 parts by mass to 3.0 parts by mass, or 1.0 part by mass to 2.0 parts by mass, but are not limited thereto.

### [Chain transfer agent (f)]

The chain transfer agent (f) preferably used when producing the composite particles (P) through an emulsion polymerization method is used to adjust the molecular weight of the copolymer forming the composite particles (P) obtained through emulsion polymerization. Examples of the chain transfer agent (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

### [Emulsion polymerization method]

Examples of emulsion polymerization methods used when producing the composite particles (P) include an emulsion polymerization method wherein the emulsion polymerization is performed while continuously supplying each component used in the emulsion polymerization into a reaction container. An aqueous medium such as water may be placed in a reaction container in advance. The temperature for emulsion polymerization is not limited, but is, for example, 30°C to 90°C, preferably 50°C to 85°C, and still more preferably 55°C to 80°C. Emulsion polymerization is preferably performed with stirring. It is also preferable to continuously supply the raw material monomer (a), the tackifier, and the radical polymerization initiator (e) to the solution during emulsion polymerization so that the concentration of the raw material monomer (a), the tackifier, and the radical polymerization initiator (e) in the solution during emulsion polymerization is uniform.

An example of a composition containing the composite particles (P) obtained through the production method of the present embodiment and an aqueous medium will be described below with reference to the drawings.

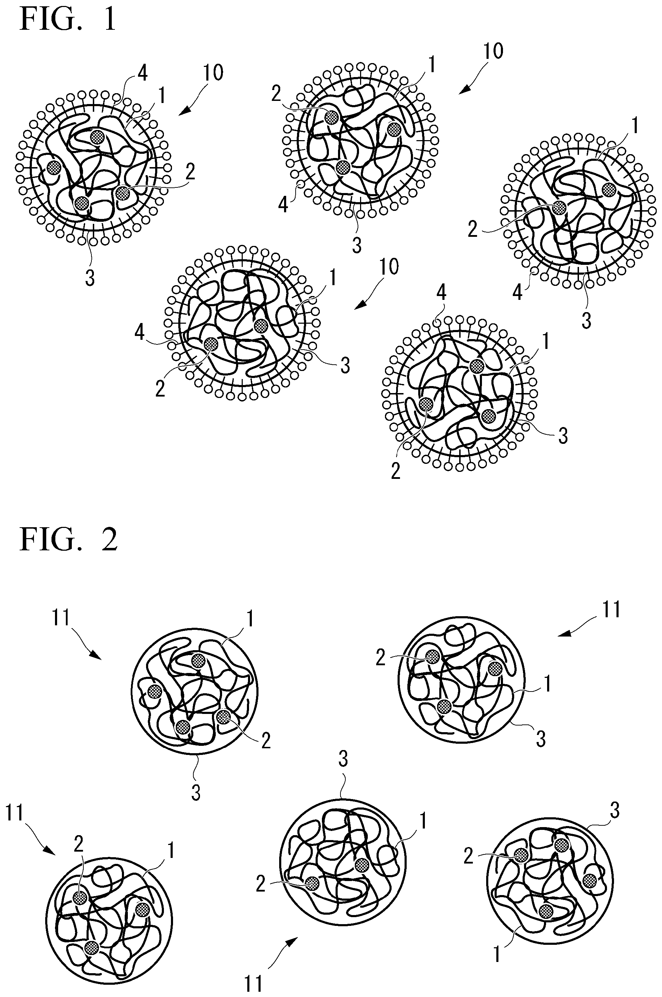

FIG. 1 is a schematic view illustrating a state of a composition which contains composite particles (P) obtained through a production method of the present embodiment and an aqueous medium present around them. That is, composite particles 10 shown in FIG. 1 are particles produced using the production method of the present embodiment which has a polymerization step of copolymerizing a raw material monomer (a) containing a monomer (a1) and a monomer (a2) in the presence of tackifiers 2. The composite particles 10 are dispersed in an aqueous medium.

Each of the composite particles 10 shown in FIG. 1 contains a copolymer 1 and tackifiers 2. Therefore, when an electrode is formed using a composition containing the composite particles 10 shown in FIG. 1 and the aqueous medium, the synergistic effect of the copolymers 1 and the tackifiers 2 contained in a composite particle 10 present between electrode active materials and in a composite particle 10 present between an electrode active material and a current collector is sufficiently exhibited. Therefore, the electrode has favorable binding properties between electrode active materials and favorable binding properties between an electrode active material and a current collector. As a result, non-aqueous secondary battery electrodes and non-aqueous secondary batteries with excellent cycle characteristics can be obtained.

As one aspect presumed by the present inventors, the copolymers 1 contained in the composite particles 10 shown in FIG. 1 have a particulate structure (lumpy structure) 3 consisting of randomly coiled polymer chains, that is, chain molecules as shown in FIG. 1. As one aspect presumed by the present inventors, the tackifiers 2 have a particulate shape and are integrated with the particulate structure 3 consisting of the chain molecules. More precisely, it is thought that the tackifiers 2 contained in the composite particles 10 enter the particulate structure 3 consisting of the chain molecules of the copolymer 1 as shown in FIG. 1. The tackifiers 2 present in the particulate structure 3 are formed such that the tackifiers 2 are surrounded by the chain molecules of the copolymer 1 in the process of making the raw material monomer (a) mixed with the tackifiers 2 into the copolymer 1 in the above-described polymerization step.

The tackifiers 2 contained in the composite particles 10 may be entirely present in the particulate structure 3 as shown in FIG. 1, or some of the tackifiers 2 may adhere to the outer surface of the particulate structure 3. The content of the tackifiers 2 contained in the composite particles 10 and the number of particles consisting of the tackifiers 2 are not particularly limited and can be changed depending on the sizes of the composite particles 10, the amount of tackifiers 2 used with respect to the amount of raw material monomer (a) used for producing the composite particles 10, and the like, and can be appropriately determined according to the application. The sizes of the composite particles 10 can be arbitrarily selected.

As one aspect, the composite particles 10 shown in FIG. 1 are emulsified particles (dispersed particles) containing the copolymer 1, the tackifiers 2, and surfactants 4. Specifically, the composite particles 10 shown in FIG. 1 have the surfactants 4 with hydrophilic groups facing outward, wherein the surfactants are bound to the copolymer 1 forming the outer surface of the particulate structure 3. The surfactants 4 do not correspond to the raw material monomer (a) which is used when producing the composite particles 10 and contains a polymerizable surfactant as the other monomer (a4), but are derived from the surfactant (c) having no polymerizability.

The composite particles (P) of the present embodiment may include the copolymer 1 and the tackifiers 2, may be the composite particles 10 having the surfactants 4 as shown in FIG. 1, or may be composite particles 11 having no surfactant as shown in FIG. 2.

FIG. 2 is a schematic view illustrating the state of a composition containing other composite particles 11 which are obtained through the production method of the present embodiment and different from the composite particles 10 and an aqueous medium located around them. The composite particles 11 shown in FIG. 2 are soap-free emulsions having no surfactant and are dispersed in an aqueous medium. A composition containing the composite particles 11 and having no surfactant can be produced through, for example, a soap-free emulsion polymerization method. To give a specific example, the composition can be produced through a soap-free emulsion polymerization method which uses, for example, a method for copolymerizing the raw material monomer (a) in the presence of tackifiers 2 without using a surfactant when producing the composite particles 11, wherein a water-soluble polymer or the like having functional groups such as carboxy groups is used, or a polymerizable surfactant or the like having radical polymerizability is used as the raw material monomer (a).

Even in a case of forming an electrode using the composition containing the composite particles 11 shown in FIG. 2 and an aqueous medium, similarly to the case of using the composition containing the composite particles 10 shown in FIG. 1 and an aqueous medium, a composite particle 11 present between electrode active materials and a composite particle 11 present between an electrode active material and a current collector each contain a copolymer 1 and tackifiers 2. Therefore, the synergistic effect of the copolymer 1 and the tackifiers 2 is sufficiently exhibited, and the electrode has favorable binding properties between electrode active materials and between an electrode active material and a current collector.

In contrast, for example, when a binder formed from a composition in which a copolymer produced in the same manner as the composite particles 10 shown in FIG. 1 except that copolymerization of the raw material monomer (a) is not performed in the presence of the tackifiers 2 and separately added tackifiers 2 are dispersed in an aqueous medium in the presence of the surfactants 4 is used to form an electrode, the binding properties between electrode active materials and the binding properties between an electrode active material and a current collector cannot be sufficiently obtained as shown below.

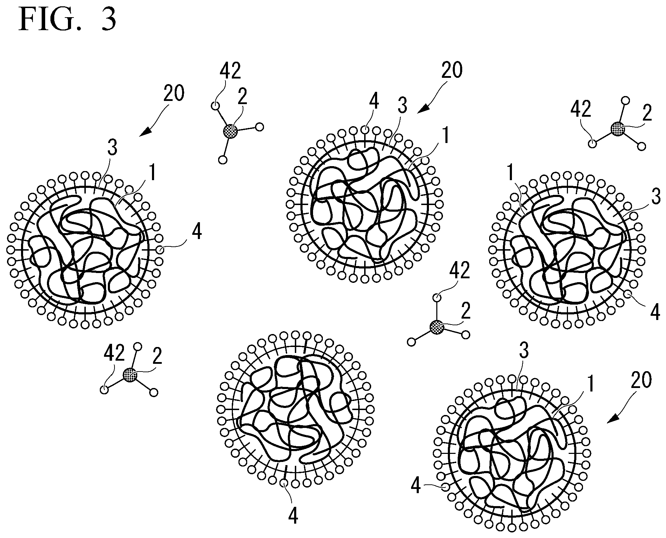

FIG. 3 is a schematic view illustrating a state of a composition containing copolymer particles 20 consisting of the copolymer 1 which are produced in the same manner as the composite particles 10 shown in FIG. 1 except that the raw material monomer (a) is copolymerized without using tackifiers 2, and separately added tackifiers 2. The copolymer particles 20 shown in FIG. 3 are emulsified particles containing the copolymer 1 and surfactants 4. The emulsified particles do not contain the tackifiers 2. The tackifiers 2 are separate emulsified particles due to binding of surfactants 42. In the composition shown in FIG. 3, the tackifiers 2 and the copolymer particles 20 containing the copolymer 1 are present in an aqueous medium while being separated from each other. Therefore, the copolymer 1 and the tackifiers 2 are likely to be placed apart between electrode active materials and between an electrode active material and a current collector which form an electrode. As a result, the synergistic effect of the copolymer 1 and the tackifiers 2 is not sufficiently obtained, resulting in electrodes with insufficient binding properties between electrode active materials and between an electrode active material and a current collector.

Moreover, apart from the surfactants 4 used when producing the copolymer 1, the composition shown in FIG. 3 contains the surfactants 42 for dispersing the tackifiers 2 in an aqueous medium. Therefore, compared to the composition containing the composite particles of the present embodiment, the content of the surfactants contained in the composition becomes larger, and the possibility of the surfactants remaining as impurities in an electrode becomes higher. As a result, it can adversely affect the cycle characteristics of a battery equipped with the electrode and cause the cycle characteristics of the battery to deteriorate. Therefore, it is preferable not to use the surfactants 42 for dispersing the tackifiers 2. However, from the viewpoint of the working environment during manufacturing of electrodes, it is preferable to use an aqueous medium as a solvent, and there is no choice but to use the surfactants 42 to disperse the tackifiers 2 in the aqueous medium.

Therefore, when an electrode is formed using the composition shown in FIG. 3, a non-aqueous secondary battery having excellent cycle characteristics cannot be obtained.

### <2. Binder for non-aqueous secondary batteries>

A binder for non-aqueous secondary batteries of the present embodiment contains the composite particles (P) of the present embodiment. The electrode binder for non-aqueous secondary batteries may contain other components together with the composite particles (P). Specifically, the electrode binder for non-aqueous secondary batteries may contain, for example, a surfactant and a polymer other than the composite particles (P).

The binder for non-aqueous secondary batteries consists of components that remain without volatilizing after a step involving heating which is performed in a method for producing a non-aqueous secondary battery described below. Specifically, for example, the components constituting the binder for non-aqueous secondary batteries are components that remain after 1 g of the binder composition for non-aqueous secondary batteries containing the composite particles (P) is weighed, placed on a 5 cm diameter aluminum plate to be placed in a dryer, and dried at 1 atm (1013 hPa) and at a temperature of 105°C for 1 hour while the air inside the dryer is circulated.

The content of the composite particles (P) contained in the binder for non-aqueous secondary batteries is preferably 80 mass% or more, more preferably 90 mass% or more, still more preferably 95 mass% or more, and still more preferably 98 mass% or more. This is because the effect of incorporating the composite particles (P) is significant.

### <3. Binder composition for non-aqueous secondary batteries>

A binder composition for non-aqueous secondary batteries of the present embodiment contains the composite particles (P) of the present embodiment and an aqueous medium (B). The binder composition for non-aqueous secondary batteries of the present embodiment is preferably one in which the composite particles (P) are dispersed in an emulsion state in the aqueous medium (B).

The binder composition for non-aqueous secondary batteries may contain other components together with the composite particles (P) and the aqueous medium (B). Specifically, the binder composition for non-aqueous secondary batteries may contain, for example, the above-described components used for synthesis of the composite particles (P).

The binder composition for non-aqueous secondary batteries of the present embodiment may be a dispersion obtained by producing the composite particles (P) through an emulsion polymerization method. That is, the binder composition for non-aqueous secondary batteries may be an emulsion containing the composite particles (P) and the aqueous medium (B). In addition, the binder composition for non-aqueous secondary batteries of the present embodiment may be a dispersion obtained by dispersing the composite particles (P) obtained through a method other than the emulsion polymerization method in the aqueous medium (B). In this case, well-known methods can be used to disperse the composite particles (P) in the aqueous medium (B).

### [Aqueous medium (B)]

The aqueous medium (B) in the binder composition for non-aqueous secondary batteries of the present embodiment is water, a hydrophilic solvent, or a mixture thereof. Examples of hydrophilic solvents include the same ones as the hydrophilic solvents exemplified as the aqueous medium (b) used for synthesis of the composite particles (P). The aqueous medium (B) may be the same as or different from the aqueous medium (b) used for synthesis of the composite particles (P).

When the binder composition for non-aqueous secondary batteries is an emulsion obtained by producing the composite particles (P) through an emulsion polymerization method, the aqueous medium (B) may be the aqueous medium (b) used for synthesis of the composite particles (P). The aqueous medium (B) may be one obtained by adding a new aqueous medium to the aqueous medium (b) used for synthesis of the composite particles (P). The aqueous medium (B) may be obtained by replacing some or all of the aqueous medium (b) contained in the dispersion obtained by producing the composite particles (P) through an emulsion polymerization method with a new aqueous solvent. The new aqueous medium used in this case may have the same composition as the aqueous medium (b) used for synthesis of the composite particles (P) or may have a different composition therefrom.

### [Nonvolatile content concentration of binder composition for non-aqueous secondary batteries]

The nonvolatile content concentration of the binder composition for non-aqueous secondary batteries of the present embodiment is preferably 20 mass% or more, more preferably 25 mass% or more, and still more preferably 30 mass% or more. This is to increase the amount of active components contained in the binder composition for non-aqueous secondary batteries. The nonvolatile content concentration of the binder composition for non-aqueous secondary batteries can be adjusted by the content of the aqueous medium (B) contained in the binder composition for non-aqueous secondary batteries.

The nonvolatile content concentration of the binder composition for non-aqueous secondary batteries is preferably 80 mass% or less, more preferably 70 mass% or less, and still more preferably 60 mass% or less. This is because the increase in viscosity of the binder composition for non-aqueous secondary batteries is suppressed and a slurry for non-aqueous secondary battery electrodes is likely to be prepared.

### <4. Slurry for non-aqueous secondary battery electrodes>

Next, a slurry for non-aqueous secondary battery electrodes of the present embodiment will be described in detail. The slurry for non-aqueous secondary battery electrodes contains the composite particles (P) of the present embodiment, an electrode active material, and an aqueous medium. The composite particles (P) and the electrode active material contained in the slurry for non-aqueous secondary battery electrodes are preferably dispersed in the aqueous medium. In addition to the composite particles (P), the electrode active material, and the aqueous medium, the slurry for non-aqueous secondary battery electrodes may contain a thickener, a conductive assistant, and the above-described components used for synthesis of the composite particles (P).

### [Content of composite particles (P)]

The content of the composite particles (P) contained in the slurry for non-aqueous secondary battery electrodes based on 100 parts by mass of the electrode active material is preferably 0.50 parts by mass or more and more preferably 1.0 part by mass or more. This is because the effect of incorporating the composite particles (P) is sufficiently exhibited.

The content of the composite particles (P) contained in the slurry for non-aqueous secondary battery electrodes based on 100 parts by mass of the electrode active material is preferably 5.0 parts by mass or less, more preferably 4.0 parts by mass or less, and still more preferably 3.0 parts by mass or less. This is because the content of the electrode active material contained in the slurry for non-aqueous secondary battery electrodes can be increased.

### [Electrode active material]

The electrode active material contained in the slurry for non-aqueous secondary battery electrodes is a material that can intercalate and deintercalate ions that serve as charge carriers, such as lithium ions. The ions that serve as charge carriers are preferably alkali metal ions, more preferably lithium ions, sodium ions, and potassium ions, and still more preferably lithium ions.

When a non-aqueous secondary battery electrode produced using the slurry for non-aqueous secondary battery electrodes is a negative electrode, the electrode active material is a negative electrode active material. The negative electrode active material preferably includes at least one of a carbon material, a silicon-containing material, and a titanium-containing material. Examples of carbon materials used as negative electrode active materials include coke such as petroleum coke, pitch coke, and coal coke, carbon materials of organic polymers, and graphite such as artificial graphite and natural graphite. Examples of silicon-containing materials used as negative electrode active materials include silicon alone and silicon compounds such as silicon oxide. Examples of titanium-containing materials used as negative electrode active materials include lithium titanate. Such materials used as negative electrode active materials may be used alone or may be mixed or compounded together.

A negative electrode active material preferably includes at least one of a carbon material and a silicon-containing material and more preferably includes a carbon material. This is because the composite particles (P) contained in the slurry for non-aqueous secondary battery electrodes becomes highly effective in improving the binding properties between negative electrode active materials and between a negative electrode active material and a current collector.

When a non-aqueous secondary battery electrode produced using the slurry for non-aqueous secondary battery electrodes is a positive electrode, the electrode active material is a positive electrode active material. As a positive electrode active material, a material with a nobler standard electrode potential than a negative electrode active material is used. Specific examples of positive electrode active materials include lithium composite oxides containing nickel, such as Ni-Co-Mn-based lithium composite oxides, Ni-Mn-Al-based lithium composite oxides, and Ni-Co-Al-based lithium composite oxides, and chalcogen compounds such as lithium cobaltate (LiCoO₂), spinel-type lithium manganate (LiMn₂O₄), olivine-type lithium iron phosphate, TiS₂, MnO₂, MoO₃, V₂O₅ and the like. These materials used as positive electrode active materials may be used alone or in a combination of two or more thereof.

### [Aqueous medium]

The aqueous medium contained in the slurry for non-aqueous secondary battery electrodes of the present embodiment is one selected from the group consisting of water, a hydrophilic solvent, and a mixture containing water and a hydrophilic solvent. Examples of hydrophilic solvents include the same ones as the hydrophilic solvents exemplified as the aqueous medium (b) used for synthesis of the composite particles (P). The aqueous medium contained in the slurry for non-aqueous secondary battery electrodes may be the same as or different from the aqueous medium (b) used for synthesis of the composite particles (P).

### [Thickener]

Examples of thickeners that may be contained in the slurry for non-aqueous secondary battery electrodes include celluloses such as carboxymethyl cellulose (CMC), hydroxyethyl cellulose, and hydroxypropyl cellulose, ammonium salts of celluloses, alkali metal salts of celluloses, polyvinyl alcohol, and polyvinyl pyrrolidone. Thickeners preferably include at least one of carboxymethyl cellulose, an ammonium salt of carboxymethyl cellulose, and an alkali metal salt of carboxymethyl cellulose. This is because the electrode active material in the slurry for non-aqueous secondary battery electrodes is likely to be dispersed.

The content of the thickener contained in the slurry for non-aqueous secondary battery electrodes based on 100 parts by mass of the electrode active material is preferably 0.50 parts by mass or more and more preferably 0.80 parts by mass or more. This is because the binding properties between the electrode active materials and between the electrode active material and a current collector, which are contained in the non-aqueous secondary battery electrode produced using the slurry for non-aqueous secondary battery electrodes, become favorable. The content of the thickener contained in the slurry for non-aqueous secondary battery electrodes based on 100 parts by mass of the electrode active material is preferably 3.0 parts by mass or less, more preferably 2.0 parts by mass or less, and still more preferably 1.5 parts by mass or less. This is because the slurry for non-aqueous secondary battery electrodes has favorable coatability.

### [Conductive assistant]

Examples of conductive assistants which may be contained in the slurry for non-aqueous secondary battery electrodes of the present embodiment include carbon black and carbon fibers. Examples of carbon black include furnace black, acetylene black, Denka Black (registered trademark) (manufactured by Denka Company Limited), and Ketjen black (registered trademark) (manufactured by Ketjen Black International Company). Examples of carbon fibers include carbon nanotubes and carbon nanofibers. Preferred examples of carbon nanotubes include VGCF (registered trademark, manufactured by Showa Denko K.K.) which is vapor grown carbon fiber.

### [Method for producing slurry for non-aqueous secondary battery electrodes]

Examples of methods for producing a slurry for non-aqueous secondary battery electrodes of the present embodiment include a method for mixing the composite particles (P) of the present embodiment, an electrode active material, an aqueous medium, a thickener incorporated as necessary, a conductive assistant incorporated as necessary, and other components incorporated as necessary together. The binder composition of the present embodiment may be used for slurry production instead of the composite particles (P) of the present embodiment. The mixing order of the components which are raw materials for the slurry for non-aqueous secondary battery electrodes is not particularly limited and can be appropriately determined. Examples of the method of mixing the components with each other include methods of using mixing devices such as stirring-type, rotary-type, or shaking-type.

### <5. Non-aqueous secondary battery electrode>

Next, a non-aqueous secondary battery electrode of the present embodiment will be described in detail. The electrode of the present embodiment contains the composite particles (P) of the present embodiment. The electrode of the present embodiment includes a current collector and an electrode active material layer formed on the current collector. Examples of the shape of the electrode of the present embodiment include, but are not particularly limited to, a laminate or a wound body.

The forming area of an electrode active material layer on a current collector is not particularly limited, and the electrode active material layer may be formed on the entire surface of the current collector or only on part of the surface on the current collector. When the current collector is in the form of a plate, foil, or the like, the electrode active material layer may be formed on both surfaces or only single surface of the current collector.

### [Current collector]

The current collector is preferably a metal sheet of 0.001 mm to 0.5 mm thick. Examples of metals forming a metal sheet include iron, copper, aluminum, nickel, and stainless steel. When the electrode of the present embodiment is a negative electrode of a lithium ion secondary battery, the current collector is preferably a copper foil.

### [Electrode active material layer]

An electrode active material layer contains the composite particles (P) of the present embodiment and an electrode active material. The electrode active material layer may contain a conductive assistant, a thickener, and the like. The electrode active material, the conductive assistant, and the thickener used can all be the same as those exemplified as components of the slurry for non-aqueous secondary battery electrodes.

### [Method for producing non-aqueous secondary battery electrode]

An electrode of the present embodiment can be produced through, for example, a method shown below. First, the slurry for non-aqueous secondary battery electrodes of the present embodiment is applied onto a current collector. The slurry for non-aqueous secondary battery electrodes is then dried. As a result, an electrode active material layer containing the composite particles (P) is formed on the current collector to make an electrode sheet. Thereafter, if necessary, the electrode sheet is cut into an appropriate size. By performing the above-described process, an electrode of the present embodiment is obtained.

Examples of methods of applying the slurry for non-aqueous secondary battery electrodes onto a current collector include, but are not particularly limited to, a reverse roll method, direct roll method, a doctor blade method, a knife method, an extrusion method, a curtain method, a gravure method, a bar method, a dipping method, and a squeeze method. Among these application methods, considering the drying properties and various physical properties, such as viscosity, of the slurry for non-aqueous secondary battery electrodes, it is preferable to use any one selected from a direct roll method, a doctor blade method, a knife method, or an extrusion method. This is because an electrode active material layer having a smooth surface and small thickness variation is obtained.

When the slurry for non-aqueous secondary battery electrodes is applied onto both surfaces of a current collector, it may be applied sequentially onto one surface at a time or simultaneously to both surfaces. The slurry for non-aqueous secondary battery electrodes may be applied continuously or intermittently onto the current collector.

The amount of slurry for non-aqueous secondary battery electrodes applied can be appropriately determined depending on the design capacity of a battery, the composition of the slurry for non-aqueous secondary battery electrodes, and the like.

A method for drying the slurry for non-aqueous secondary battery electrodes applied onto a current collector is not particularly limited, but a method selected from, for example, hot air, reduced pressure or vacuum environment, (far) infrared rays, and low-temperature air can be used alone or in combination.

The drying temperature and drying time when drying the slurry for non-aqueous secondary battery electrodes can be appropriately adjusted according to the nonvolatile content concentration in the slurry for non-aqueous secondary battery electrodes, the application amount onto the current collector, and the like. The drying temperature is preferably 40°C to 350°C, and is, from the viewpoint of productivity, more preferably 60°C to 100°C. The drying time is preferably 1 minute to 30 minutes.

An electrode sheet with an electrode active material layer formed on a current collector may be cut so that it has an appropriate size and shape as an electrode. The method for cutting an electrode sheet is not particularly limited, and a slit, a laser, wire cutting, a cutter, Thomson, and the like can be used.

In the present embodiment, an electrode sheet may be pressed as necessary before or after cutting the electrode sheet. This allows the electrode active material to be firmly bound to a current collector and the electrode thickness to be reduced, making a non-aqueous secondary battery smaller.

General methods can be used as methods for pressing an electrode sheet. A die press method or a roll press method is particularly preferably used as a pressing method.

When the die press method is used, the pressing pressure is not particularly limited, but is preferably set to 0.5 t/cm² to 5 t/cm².

When the roll press method is used, the pressing load is not particularly limited, but is preferably set to 0.5 t/cm to 8 t/cm. This is because it is possible to suppress the decrease in capacities of insertion and desorption of charge carriers such as lithium ions into the electrode active material while obtaining the above-described effects through pressing.

### <6. Non-aqueous secondary battery>

Next, a lithium ion secondary battery will be described as a preferred example of the non-aqueous secondary battery according to the present embodiment. The configuration of the non-aqueous secondary battery of the present invention is not limited to examples shown below.

The lithium ion secondary battery of the present embodiment is one in which a positive electrode, a negative electrode, an electrolyte, and a well-known component such as a separator provided as necessary are housed in an exterior body.

The shape of the lithium ion secondary battery can be any shape, such as a coin type, a button type, a sheet type, a cylindrical type, a square type, or a flat type.

### [Positive and negative electrodes]

In the lithium ion secondary battery of the present embodiment, one or both of positive and negative electrodes include the electrode active material layer of the present embodiment containing the composite particles (P) of the present embodiment. In the lithium ion secondary battery of the present embodiment, at least a negative electrode of positive and negative electrodes preferably includes an electrode active material layer containing the composite particles (P).

When only one electrode among positive and negative electrodes in the lithium ion secondary battery of the present embodiment includes an electrode active material layer containing the composite particles (P) of the present embodiment, an electrode containing a well-known binder such as polyvinylidene fluoride instead of the composite particles (P) of the present embodiment is used as an electrode containing no composite particles (P) of the present embodiment.

### [Electrolyte]

A non-aqueous liquid with ionic conductivity can be used as an electrolyte. Examples of electrolytes include a solution, in which an electrolyte is dissolved in an organic solvent, and an ionic liquid, and the former being preferred. This is because it is possible to obtain a lithium ion secondary battery with low production costs and low internal resistance.

Alkali metal salts can be used as electrolytes and can be appropriately selected depending on the type of electrode active material and the like. Examples of electrolytes include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and lithium aliphatic carboxylate. Other alkali metal salts can also be used as electrolytes.

Examples of organic solvents dissolving an electrolyte include, but are not particularly limited to, carbonic acid ester compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carbonic acid esters such as ethyl acetate, propyl acetate, methyl propionate, ethyl propionate, and propyl propionate. These organic solvents may be used alone or in a combination of two or more thereof. Among these, a combination of linear carbonate-based solvents is preferably used as an organic solvent.

### [Exterior body]

As an outer body, for example, one made of an aluminum laminate material consisting of aluminum foil and a resin film can be appropriately used, but there is no limitation.

### Examples

Hereinafter, the present invention will be more specifically described using examples and comparative examples. The examples shown below are provided to facilitate understanding of the contents of the present invention. The present invention is not limited only to these examples.

In the following examples, a negative electrode of a lithium ion secondary battery was manufactured as an example of the non-aqueous secondary battery electrode of the present invention, and a lithium ion secondary battery was manufactured as an example of the non-aqueous secondary battery. These were compared with lithium ion secondary batteries and negative electrodes of the lithium ion secondary batteries in comparative examples, and the effect of the invention was confirmed.

In addition, water used in the following examples and comparative examples is ion-exchanged water, unless otherwise specified.

### < 1. Production of binder composition for non-aqueous secondary batteries>

### (Examples 1 to 18 and Comparative Example 2)

Raw material monomers (a) and tackifiers shown in Tables 1 to 7 were mixed with 200 parts by mass of water as an aqueous medium (b) at mass ratios shown in Tables 1 to 7 and emulsified to prepare monomer emulsified liquids. Subsequently, aqueous solutions were prepared in which radical polymerization initiators (e) shown in Tables 1 to 7 were each dissolved in 50 parts by mass of water in the amounts shown in Tables 1 to 7.

150 parts by mass of water was placed in a separable flask with a cooling tube, a thermometer, a stirrer, and a dropping funnel, and the temperature was raised to 75°C. Emulsions were obtained by performing emulsion polymerization by continuously supplying each of the above-described monomer emulsified liquids and each of the aqueous solutions, in which each of the above-described radical polymerization initiator (e) was dissolved, to this separable flask respectively while stirring at 75°C over 3 hours.

The obtained emulsions were cooled to room temperature. Subsequently, 133 parts by mass of water and 25 mass% ammonia water (17 parts by mass of ammonia and 51 parts by mass of water) in the amounts shown in Tables 1 to 7 were added to each emulsion. As a result, binder compositions for non-aqueous secondary batteries of Examples 1 to 18 and Comparative Examples 2 which consisted of the emulsions in which dispersed particles of Examples 1 to 18 and Comparative Example 2 were dispersed in the aqueous media were produced. The dispersed particles (composite particles) of Comparative Example 2 contain no monomer (a2).

### (Comparative Example 1)

The raw material monomer (a) shown in Table 7 was mixed with 200 parts by mass of water as an aqueous medium (b) at mass ratios shown in Table 7 and emulsified to prepare a monomer emulsified liquid. Subsequently, an aqueous solution was prepared in which the radical polymerization initiator (e) shown in Table 7 was dissolved in 50 parts by mass of water in the amount shown in Table 7.

150 parts by mass of water was placed in a separable flask with a cooling tube, a thermometer, a stirrer, and a dropping funnel, and the temperature was raised to 75°C. An emulsion was obtained by performing emulsion polymerization by continuously supplying the above-described monomer emulsified liquid and the aqueous solution in which the above-described radical polymerization initiator (e) was dissolved to this separable flask while stirring at 75°C over 3 hours.

The obtained emulsion was cooled to room temperature. Subsequently, 133 parts by mass of water and 25 mass% ammonia water in the amount shown in Table 7 were added to the emulsion. As a result, a binder composition for non-aqueous secondary batteries of Comparative Examples 1 which consists of the emulsion in which emulsified particles containing a copolymer of Comparative Example 1 were dispersed in the aqueous medium was produced. The emulsified particles in the emulsion of Comparative Example 1 contain a copolymer, but not a tackifier.

### (Comparative Examples 3 and 4)

Emulsions of Comparative Examples 3 and 4 were obtained in the same manner as in Comparative Example 1. The emulsified particles in these emulsions contain copolymers, but not tackifiers. As will be described below, in Comparative Examples 3 and 4, tackifiers are present apart from the emulsified particles.

The obtained emulsions were cooled to room temperature. Thereafter, an emulsion of the tackifier shown in Table 7 was added to the emulsions in the amounts shown in Table 7, 123 parts by mass of water and 25 mass% ammonia water in the amounts shown in Table 7 were further added thereto, and the mixture was stirred for 30 minutes using a homo-disper. The amount of emulsion AM-1000-NT in Table 7 added means the amount of emulsified particles containing the tackifier in each emulsion.

Accordingly, binder compositions for non-aqueous secondary batteries of Comparative Examples 3 and 4 were produced which consisted of the emulsions in which emulsified particles containing a tackifier and emulsified particles containing a copolymer of Comparative Examples 3 and 4 were each independently dispersed in each aqueous medium.

In the binder compositions for non-aqueous secondary batteries of Comparative Examples 3 and 4, no dispersion abnormality such as aggregation of emulsified particles containing a tackifier and emulsified particles containing a copolymer in each composition was observed. In other words, in Comparative Examples 3 and 4, no composite particles of the present embodiment which contained a tackifier and a copolymer were formed, and the binder compositions for non-aqueous secondary batteries of Comparative Examples 3 and 4 did not contain the composite particles of the present embodiment which contained a tackifier and a copolymer.

It was inferred that this may be because, in the binder compositions for non-aqueous secondary batteries of Comparative Examples 3 and 4, the emulsified particles containing a tackifier and the emulsified particles containing a copolymer in each composition were electrically opposed to each other, so that the dispersion of the emulsified particles containing a tackifier and the emulsified particles containing a copolymer was maintained in the compositions.

**[Table 1]**

| | Component | | Compound name | | Example 1 | | Exmple 2 | | Example 3 | |
|---|---|---|---|---|---|---|---|---|---|---|
| | | | | | Parts by mass | *1 | Parts by mass | *1 | Parts by mass | *1 |
| | | Monomer (a1) | Styrene | | 188 | 48.6 | 188 | 48.6 | 188 | 48.6 |
| | | | Methyl methacrylate | | | | | | | |
| | | | n-Butyl acrylate | | | | | | | |
| | | | 2-Ethylhexyl acrylate | | 164 | 42.4 | 164 | 42.4 | 164 | 42.4 |
| | | | 2-Hydroxyethyl methacrylate | | 7.5 | 1.9 | 7.5 | 1.9 | 7.5 | 1.9 |
| | Raw material monomer (a) | Monomer (a2) | Acrylic acid | | 15 | 3.9 | 15 | 3.9 | 15 | 3.9 |
| | | | Methacrylic acid | | | | | | | |
| | | | Itaconic acid | | 8.0 | 2.1 | 8.0 | 2.1 | 8.0 | 2.1 |
| | | Monomer (a3) | Divinylbenzene | | 0.2 | 0.1 | 0.2 | 0.1 | 0.2 | 0.1 |
| | | | trimethylolpropane triacrylate | | | | | | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| Amount of components used in preparation of binder composition (Parts by mass) | | | | Arkon M-90 | 10.0 | 2.61 | | 0.00 | | 0.00 |
| | | | | Alicyclic saturated hydrocarbon resin | | | | | | |
| | | | | Arkon M-135 | | 0.00 | 10.0 | 2.61 | | 0.00 |
| | | | | Alicyclic saturated hydrocarbon resin | | | | | | |
| | | | Hydrogenated petroleum resin | Arkon P-90 | | 0.00 | | 0.00 | 10.0 | 2.61 |
| | | | | Alicyclic saturated hydrocarbon resin | | | | | | |
| | | | | Arkon P-140 | | 0.00 | | 0.00 | | 0.00 |
| | Tackifier | | | Alicyclic saturated hydrocarbon resin | | | | | | |
| | | | | AM-1000-NT | | 0.00 | | 0.00 | | 0.00 |
| | | | | Alicyclic saturated hydrocarbon resin Emulsion | | | | | | |
| | | | Rosin-based resin | Hariester DS-70L | | 0.00 | | 0.00 | | 0.00 |
| | | | | Rosin ester resin | | | | | | |
| | | | | Hariester FK-100 | | 0.00 | | 0.00 | | 0.00 |
| | | | | Disproportionated rosin ester resin | | | | | | |
| | | | Terpene-based resin | YS Resin PX800 Polyterpene resin | | 0.00 | | 0.00 | | 0.00 |
| | | | | YS Resin PX1000 Polyterpene resin | | 0.00 | | 0.00 | | 0.00 |

| | | | | | | | Timing of addition | Before polymerization | Before polymerization | Before polymerization |
|---|---|---|---|---|---|---|---|---|---|---|
| | | | | | | Polymerization initiator (e) | Potassium persulfate | 1.0 | 1.0 | 1.0 |
| | | | | | | | Rongalite SFS | 0.6 | 0.6 | 0.6 |
| | | | | | | Basic substance (d) | Ammonia | 17 | 17 | 17 |
| | | | | | | Aqueous medium (b) | Water | 583 | 583 | 583 |
| Evaluation | | | | | | Tackifier | Softening point (°C) | 90 | 135 | 90 |
| | | | | | | Binder composition | Nonvolatile content concentration (mass%) | 40 | 40 | 40 |
| | | | | | | | Glass transition temperature (°C) | 15 | 15 | 15 |
| | | | | | | Battery | Internal resistance (DCR) (Ω) | 25 | 25 | 25 |
| | | | | | | | Discharge capacity retention rate after 500 cycles (%) | 82 | 82 | 82 |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 2]**

| | Component | | Compound name | | Example 4 | | Exmple 5 | | Example 6 | |
|---|---|---|---|---|---|---|---|---|---|---|
| | | | | | Parts by mass | *1 | Parts by mass | *1 | Parts by mass | *1 |
| | | Monomer (a1) | Styrene | | 188 | 48.6 | 188 | 48.6 | 188 | 48.6 |
| | | | Methyl methacrylate | | | | | | | |
| | | | n-Butyl acrylate | | | | | | | |
| | | | 2-Ethylhexyl acrylate | | 164 | 42.4 | 164 | 42.4 | 164 | 42.4 |
| | Raw material monomer (a) | | 2-Hydroxyethyl methacrylate | | 7.5 | 1.9 | 7.5 | 1.9 | 7.5 | 1.9 |
| | | Monomer (a2) | Acrylic acid | | 15 | 3.9 | 15 | 3.9 | 15 | 3.9 |
| | | | Methacrylic acid | | | | | | | |
| | | | Itaconic acid | | 8.0 | 2.1 | 8.0 | 2.1 | 8.0 | 2.1 |
| | | Monomer (a3) | Divinylbenzene | | 0.2 | 0.1 | 0.2 | 0.1 | 0.2 | 0.1 |
| | | | trimethylolpropane triacrylate | | | | | | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| | | | | Arkon M-90 | | 0.00 | | 0.00 | | 0.00 |
| Amount of components used in preparation of binder composition (Parts by mass) | | | | Alicyclic saturated hydrocarbon resin | | | | | | |
| | | | | Arkon M-135 | | 0.00 | | 0.00 | | 0.00 |
| | | | | Alicyclic saturated hydrocarbon resin | | | | | | |
| | | | Hydrogenated petroleum resin | Arkon P-90 | | 0.00 | | 0.00 | | 0.00 |
| | | | | Alicyclic saturated hydrocarbon resin | | | | | | |
| | | | | Arkon P-140 | 10.0 | 2.61 | | 0.00 | | 0.00 |
| | | | | Alicyclic saturated hydrocarbon resin | | | | | | |
| | Tackifier | | | AM-1000-NT | | 0.00 | | 0.00 | | 0.00 |
| | | | | Alicyclic saturated hydrocarbon resin Emulsion | | | | | | |
| | | | Rosin-based resin | Hariester DS-70L | | 0.00 | 10.0 | 2.61 | | 0.00 |
| | | | | Rosin ester resin | | | | | | |
| | | | | Hariester FK-100 | | 0.00 | | 0.00 | 10.0 | 2.61 |
| | | | | Disproportionated rosin ester resin | | | | | | |
| | | | Terpene-based resin | YS Resin PX800 Polyterpene resin | | 0.00 | | 0.00 | | 0.00 |
| | | | | YS Resin PX1000 Polyterpene resin | | 0.00 | | 0.00 | | 0.00 |

| | | | Timing of addition | | Before polymerization | | Before polymerization | | Before polymerization | |
|---|---|---|---|---|---|---|---|---|---|---|
| | Polymerization initiator (e) | | Potassium persulfate | | 1.0 | | 1.0 | | 1.0 | |
| | | | Rongalite SFS | | 0.6 | | 0.6 | | 0.6 | |
| | Basic substance (d) | | Ammonia | | 17 | | 17 | | 17 | |
| | Aqueous medium (b) | | Water | | 583 | | 583 | | 583 | |
| Evaluation | Tackifier | | Softening point (°C) | | 140 | | 70 | | 100 | |
| | Binder composition | | Nonvolatile content concentration (mass%) | | 40 | | 40 | | 40 | |
| | | | Glass transition temperature (°C) | | 15 | | 15 | | 15 | |
| | Battery | | Internal resistance (DCR) (Ω) | | 25 | | 25 | | 25 | |
| | | | Discharge capacity retention rate after 500 cycles (%) | | 82 | | 81 | | 80 | |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 3]**

| | Component | | Compound name | | Example 7 | | Exmple 8 | | Example 9 | |
|---|---|---|---|---|---|---|---|---|---|---|
| | | | | | Parts by mass | *1 | Parts by mass | *1 | Parts by mass | *1 |
| | | Monomer (a1) | Styrene | | 188 | 48.6 | 188 | 48.6 | 188 | 48.6 |
| | | | Methyl methacrylate | | | | | | | |
| | | | n-Butyl acrylate | | | | | | | |
| | | | 2-Ethylhexyl acrylate | | 164 | 42.4 | 164 | 42.4 | 164 | 42.4 |
| | | | 2-Hydroxyethyl methacrylate | | 7.5 | 1.9 | 7.5 | 1.9 | 7.5 | 1.9 |
| | Raw material monomer (a) | Monomer (a2) | Acrylic acid | | 15 | 3.9 | 15 | 3.9 | 15 | 3.9 |
| | | | Methacrylic acid | | | | | | | |
| | | | Itaconic acid | | 8.0 | 2.1 | 8.0 | 2.1 | 8.0 | 2.1 |
| | | Monomer (a3) | Divinylbenzene | | 0.2 | 0.1 | 0.2 | 0.1 | 0.2 | 0.1 |
| | | | trimethylolpropane triacrylate | | | | | | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| Amount of components used in preparation of binder composition (Parts by mass) | | | | Arkon M-90 | | 0.00 | | 0.00 | 5.0 | 1.31 |
| | | | | Alicyclic saturated hydrocarbon resin | | | | | | |
| | | | | Arkon M-135 | | 0.00 | | 0.00 | | 0.00 |
| | | | | Alicyclic saturated hydrocarbon resin | | | | | | |
| | | | Hydrogenated petroleum resin | Arkon P-90 | | 0.00 | | 0.00 | | 0.00 |
| | | | | Alicyclic saturated hydrocarbon resin | | | | | | |
| | | | | Arkon P-140 | | 0.00 | | 0.00 | | 0.00 |
| | | | | Alicyclic saturated hydrocarbon resin | | | | | | |
| | Tackifier | | | AM-1000-NT | | 0.00 | | 0.00 | | 0.00 |
| | | | | Alicyclic saturated hydrocarbon resin Emulsion | | | | | | |
| | | | Rosin-based resin | Hariester DS-70L | | 0.00 | | 0.00 | | 0.00 |
| | | | | Rosin ester resin | | | | | | |
| | | | | Hariester FK-100 | | 0.00 | | 0.00 | | 0.00 |
| | | | | Disproportionated rosin ester resin | | | | | | |
| | | | Terpene-based resin | YS Resin PX800 | 10.0 | 2.61 | | 0.00 | | 0.00 |
| | | | | Polyterpene resin | | | | | | |
| | | | | YS Resin PX1000 | | 0.00 | 10.0 | 2.61 | | 0.00 |
| | | | | Polyterpene resin | | | | | | |

| | | | Timing of addition | | Before polymerization | | Before polymerization | | Before polymerization | |
|---|---|---|---|---|---|---|---|---|---|---|
| | Polymerization initiator (e) | | Potassium persulfate | | 1.0 | | 1.0 | | 1.0 | |
| | | | Rongalite SFS | | 0.6 | | 0.6 | | 0.6 | |
| | Basic substance (d) | | Ammonia | | 17 | | 17 | | 17 | |
| | Aqueous medium (b) | | Water | | 583 | | 583 | | 583 | |
| Evaluation | Tackifier | | Softening point (°C) | | 80 | | 100 | | 90 | |
| | Binder composition | | Nonvolatile content concentration (mass%) | | 40 | | 40 | | 40 | |
| | | | Glass transition temperature (°C) | | 15 | | 15 | | 15 | |
| | Battery | | Internal resistance (DCR) (Ω) | | 25 | | 25 | | 25 | |
| | | | Discharge capacity retention rate after 500 cycles (%) | | 80 | | 81 | | 80 | |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 4]**

| | Component | | Compound name | | Example 10 | | Exmple 11 | | Example 12 | |
|---|---|---|---|---|---|---|---|---|---|---|
| | | | | | Parts by mass | *1 | Parts by mass | *1 | Parts by mass | *1 |
| | | Monomer (a1) | Styrene | | 188 | 48.6 | 188 | 48.6 | | |
| | | | Methyl methacrylate | | | | | | 188 | 48.6 |
| | | | n-Butyl acrylate | | | | | | | |
| | | | 2-Ethylhexyl acrylate | | 164 | 42.4 | 164 | 42.4 | 164 | 42.4 |
| | Raw material monomer (a) | | 2-Hydroxyethyl methacrylate | | 7.5 | 1.9 | 7.5 | 1.9 | 7.5 | 1.9 |
| | | Monomer (a2) | Acrylic acid | | 15 | 3.9 | 15 | 3.9 | 15 | 3.9 |
| | | | Methacrylic acid | | | | | | | |
| | | | Itaconic acid | | 8.0 | 2.1 | 8.0 | 2.1 | 8.0 | 2.1 |
| | | Monomer (a3) | Divinylbenzene | | 0.2 | 0.1 | 0.2 | 0.1 | 0.2 | 0.1 |
| | | | trimethylolpropane triacrylate | | | | | | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| | | | | Arkon M-90 | 20.0 | 5.23 | 40.0 | 10.45 | 10.0 | 2.61 |
| Amount of components used in preparation of binder composition (Parts by mass) | | | | Alicyclic saturated hydrocarbon resin | | | | | | |
| | | | | Arkon M-135 | | 0.00 | | 0.00 | | 0.00 |
| | | | | Alicyclic saturated hydrocarbon resin | | | | | | |
| | | | Hydrogenated petroleum resin | Arkon P-90 | | 0.00 | | 0.00 | | 0.00 |
| | | | | Alicyclic saturated hydrocarbon resin | | | | | | |
| | | | | Arkon P-140 | | 0.00 | | 0.00 | | 0.00 |
| | | | | Alicyclic saturated hydrocarbon resin | | | | | | |
| | | | | AM-1000-NT | | 0.00 | | 0.00 | | 0.00 |
| | Tackifier | | | Alicyclic saturated hydrocarbon resin Emulsion | | | | | | |
| | | | Rosin-based resin | Hariester DS-70L Rosin ester resin | | 0.00 | | 0.00 | | 0.00 |
| | | | | Hariester FK-100 | | 0.00 | | 0.00 | | 0.00 |
| | | | | Disproportionated rosin ester resin | | | | | | |
| | | | Terpene-based resin | YS Resin PX800 | rizat | 0.00 | | 0.00 | | 0.00 |
| | | | | Polyterpene resin | | | | | | |
| | | | | YS Resin PX1000 | | 0.00 | | 0.00 | | 0.00 |
| | | | | Polyterpene resin | | | | | | |

| | | | Timing of addition | | Before polymeion | | Before polymerization | | Before polymerization | |
|---|---|---|---|---|---|---|---|---|---|---|
| | Polymerization initiator (e) | | Potassium persulfate | | 1.0 | | 1.0 | | 1.0 | |
| | | | Rongalite SFS | | 0.6 | | 0.6 | | 0.6 | |
| | Basic substance (d) | | Ammonia | | 17 | | 17 | | 17 | |
| | Aqueous medium (b) | | Water | | 583 | | 583 | | 583 | |
| Evaluation | Tackifier | | Softening point (°C) | | 90 | | 90 | | 90 | |
| | Binder composition | | Nonvolatile content concentration (mass%) | | 41 | | 42 | | 40 | |
| | | | Glass transition temperature (°C) | | 15 | | 15 | | 15 | |
| | Battery | | Internal resistance (DCR) (Ω) | | 25 | | 26 | | 23 | |
| | | | Discharge capacity retention rate after 500 cycles (%) | | 83 | | 85 | | 81 | |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 5]**

| | Component | | Compound name | | Example 13 | | Exmple 14 | | Example 15 | |
|---|---|---|---|---|---|---|---|---|---|---|
| | | | | | Parts by mass | *1 | Parts by mass | *1 | Parts by mass | *1 |
| | | Monomer (a1) | Styrene | | 152 | 39.3 | 191.75 | 49.6 | 188 | 48.6 |
| | | | Methyl methacrylate | | | | | | | |
| | | | n-Butyl acrylate | | 200 | 51.7 | | | | |
| | | | 2-Ethylhexyl acrylate | | | | 167.75 | 43.4 | 164 | 42.4 |
| | Raw material monomer (a) | | 2-Hydroxyethyl methacrylate | | 7.5 | 1.9 | | | 7.5 | 1.9 |
| | | Monomer (a2) | Acrylic acid | | 15 | 3.9 | 15 | 3.9 | | |
| | | | Methacrylic acid | | | | | | 15 | 3.9 |
| | | | Itaconic acid | | 8.0 | 2.1 | 8.0 | 2.1 | 8.0 | 2.1 |
| | | Monomer (a3) | Divinylbenzene | | 0.2 | 0.1 | 0.2 | 0.1 | 0.2 | 0.1 |
| | | | trimethylolpropane triacrylate | | | | | | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| Amount of components used in preparation of binder composition (Parts by mass) | | | | Arkon M-90 | 10.0 | 2.61 | 10.0 | 2.61 | 10.0 | 2.61 |
| | | | | Alicyclic saturated hydrocarbon resin | | | | | | |
| | | | | Arkon M-135 | | 0.00 | | 0.00 | | 0.00 |
| | | | | Alicyclic saturated hydrocarbon resin | | | | | | |
| | | | Hydrogenated petroleum resin | Arkon P-90 | | 0.00 | | 0.00 | | 0.00 |
| | | | | Alicyclic saturated hydrocarbon resin | | | | | | |
| | | | | Arkon P-140 | | 0.00 | | 0.00 | | 0.00 |
| | | | | Alicyclic saturated hydrocarbon resin | | | | | | |
| | Tackifier | | | AM-1000-NT | | 0.00 | | 0.00 | | 0.00 |
| | | | | Alicyclic saturated hydrocarbon resin Emulsion | | | | | | |
| | | | Rosin-based resin | Hariester DS-70L | | 0.00 | | 0.00 | | 0.00 |
| | | | | Rosin ester resin | | | | | | |
| | | | | Hariester FK-100 | | 0.00 | | 0.00 | | 0.00 |
| | | | | Disproportionated rosin ester resin | | | | | | |
| | | | Terpene-based resin | YS Resin PX800 Polyterpene resin | | 0.00 | | 0.00 | | 0.00 |
| | | | | YS Resin PX1000 Polyterpene resin | | 0.00 | | 0.00 | | 0.00 |

| | | | Timing of addition | | Before polymerization | | Before polymerization | | Before polymerization | |
|---|---|---|---|---|---|---|---|---|---|---|
| | Polymerization initiator (e) | | Potassium persulfate | | 1.0 | | 1.0 | | 1.0 | |
| | | | Rongalite SFS | | 0.6 | | 0.6 | | 0.6 | |
| | Basic substance (d) | | Ammonia | | 17 | | 17 | | 17 | |
| | Aqueous medium (b) | | Water | | 583 | | 583 | | 583 | |
| Evaluation | Tackifier | | Softening point (°C) | | 90 | | 90 | | 90 | |
| | Binder composition | | Nonvolatile content concentration (mass%) | | 40 | | 40 | | 40 | |
| | | | Glass transition temperature (°C) | | 15 | | 15 | | 15 | |
| | Battery | | Internal resistance (DCR) (Ω) | | 25 | | 25 | | 23 | |
| | | | Discharge capacity retention rate after 500 cycles (%) | | 82 | | 82 | | 82 | |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 6]**

| | Component | | Compound name | | Example 16 | | Exmple 17 | | Example 18 | |
|---|---|---|---|---|---|---|---|---|---|---|
| | | | | | Parts by mass | *1 | Parts by mass | *1 | Parts by mass | *1 |
| | | Monomer (a1) | Styrene | | 188 | 48.6 | 188 | 48.6 | 188 | 48.6 |
| | | | Methyl methacrylate | | | | | | | |
| | | | n-Butyl acrylate | | | | | | | |
| | | | 2-Ethylhexyl acrylate | | 164 | 42.4 | 164 | 42.4 | 164 | 42.4 |
| | Raw material monomer (a) | | 2-Hydroxyethyl methacrylate | | 7.5 | 1.9 | 7.5 | 1.9 | 7.5 | 1.9 |
| | | Monomer (a2) | Acrylic acid | | | | 15 | 3.9 | 15 | 3.9 |
| | | | Methacrylic acid | | 23 | 5.9 | | | | |
| | | | Itaconic acid | | | | 8.0 | 2.1 | 8.0 | 2.1 |
| | | Monomer (a3) | Divinylbenzene | | 0.2 | 0.1 | | | | |
| | | | trimethylolpropane triacrylate | | | | 0.2 | 0.1 | | |
| | | Monomer (a4) | Sodium p-styrenesulfonate | | 2.5 | 0.6 | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 |
| Amount of components used in preparation of binder composition (Parts by mass) | | | Hydrogenated petroleum resin | Arkon M-90 Alicyclic saturated hydrocarbon resin | 10.0 | 2.61 | 10.0 | 2.61 | 10.0 | 2.61 |
| | | | | Arkon M-135 Alicyclic saturated hydrocarbon resin | | 0.00 | | 0.00 | | 0.00 |
| | | | | Arkon P-90 Alicyclic saturated hydrocarbon resin | | 0.00 | | 0.00 | | 0.00 |
| | | | | Arkon P-140 Alicyclic saturated hydrocarbon resin | | 0.00 | | 0.00 | | 0.00 |
| | Tackifier | | | AM-1000-NT Alicyclic saturated hydrocarbon resin Emulsion | | 0.00 | | 0.00 | | 0.00 |
| | | | Rosin-based resin | Hariester DS-70L Rosin ester resin | | 0.00 | | 0.00 | | 0.00 |
| | | | | Hariester FK-100 Disproportionated rosin ester resin | | 0.00 | | 0.00 | | 0.00 |
| | | | Terpene-based resin | YS Resin PX800 Polyterpene resin | | 0.00 | | 0.00 | | 0.00 |
| | | | | YS Resin PX1000 Polyterpene resin | | 0.00 | | 0.00 | | 0.00 |

| | | | Timing of addition | | Before polymerization | | Before polymerization | | Before polymerization | |
|---|---|---|---|---|---|---|---|---|---|---|
| | Polymerization initiator (e) | | Potassium persulfate | | 1.0 | | 1.0 | | 1.0 | |
| | | | Rongalite SFS | | 0.6 | | 0.6 | | 0.6 | |
| | Basic substance (d) | | Ammonia | | 17 | | 17 | | 17 | |
| | Aqueous medium (b) | | Water | | 583 | | 583 | | 583 | |
| Evaluation | Tackifier | | Softening point (°C) | | 90 | | 90 | | 90 | |
| | Binder composition | | Nonvolatile content concentration (mass%) | | 40 | | 40 | | 40 | |
| | | | Glass transition temperature (°C) | | 15 | | 15 | | 15 | |
| | Battery | | Internal resistance (DCR) (Ω) | | 22 | | 25 | | 26 | |
| | | | Discharge capacity retention rate after 500 cycles (%) | | 82 | | 81 | | 79 | |

| | | | | | | | | | | |
|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | |

**[Table 7]**

| | Component | | Compound name | | Comparative Example 1 | | Comparative Example 2 | | Comparative Example 3 | | Comparative Example 4 | |
|---|---|---|---|---|---|---|---|---|---|---|---|---|
| | | | | | Parts by mass | *1 | Parts by mass | *1 | Parts by mass | *1 | Parts by mass | *1 |
| | | Monomer (a1) | Styrene | | 191.5 | 48.6 | 201 | 51.9 | 188 | 48.6 | 188 | 48.6 |
| | | | Methyl methacrylate | | | | | | | | | |
| | | | n-Butyl acrylate | | | | | | | | | |
| | | | 2-Ethylhexyl acrylate | | 167.5 | 42.5 | 177 | 45.7 | 164 | 42.4 | 164 | 42.4 |
| | | | 2-Hydroxyethyl methacrylate | | 7.5 | 1.9 | 7.5 | 1.9 | 7.5 | 1.9 | 7.5 | 1.9 |
| | Raw material monomer (a) | Monomer (a2) | Acrylic acid | | 15 | 3.8 | | | 15 | 3.9 | 15 | 3.9 |
| | | | Methacrylic acid | | | | | | | | | |
| | | | Itaconic acid | | 8.0 | 2.0 | | | 8.0 | 2.1 | 8.0 | 2.1 |
| | | Monomer (a3) | Divinylbenzene | | 0.2 | 0.1 | 0.2 | 0.1 | 0.2 | 0.1 | | |
| | | | trimethylolpropane triacrylate | | | | | | | | | |
| | | Monomer (a4) | Sodium p-styrenesulfonate | | 2.5 | 0.6 | | | 2.5 | 0.6 | 2.5 | 0.6 |
| | | | Polyoxyethylene alkyl ether sulfate ester salt | | 1.7 | 0.4 | 1.7 | 0.4 | 1.7 | 0.4 | 1.7 | 0.4 |
| Amount of components used in preparation of binder composition (Parts by mass) | Tackifier | | Hydrogenated petroleum resin | Arkon M-90 Alicyclic saturated hydrocarbon resin | | 0.00 | 10.0 | 2.59 | | 0.00 | | 0.00 |
| | | | | Arkon M-135 Alicyclic saturated hydrocarbon resin | | 0.00 | | 0.00 | | 0.00 | | 0.00 |
| | | | | Arkon P-90 Alicyclic saturated hydrocarbon resin | | 0.00 | | 0.00 | | 0.00 | | 0.00 |
| | | | | Arkon P-140 Alicyclic saturated hydrocarbon resin | | 0.00 | | 0.00 | | 0.00 | | 0.00 |
| | | | | AM-1000-NT Alicyclic saturated hydrocarbon resin Emulsion | | 0.00 | | 0.00 | 10.0 | 2.61 | 10.0 | 2.61 |
| | | | Rosin-based resin | Hariester DS-70L Rosin ester resin | | 0.00 | | 0.00 | | 0.00 | | 0.00 |
| | | | | Hariester FK-100 Disproportionated rosin ester resin | | 0.00 | | 0.00 | | 0.00 | | 0.00 |
| | | | Terpene-based resin | YS Resin PX800 Polyterpene resin | | 0.00 | | 0.00 | | 0.00 | | 0.00 |
| | | | YS Resin PX1000 Polyterpene resin | | | 0.00 | | 0.00 | | 0.00 | | 0.00 |
| | | | Timing of addition | | | | Before polymerization | | After polymerization | | After polymerization | |
| | Polymerization initiator (e) | | Potassium persulfate | | 1 | | 1.0 | | 1.0 | | 1.0 | |
| | | | Rongalite SFS | | 0.6 | | 0.6 | | 0.6 | | 0.6 | |
| | Basic substance (d) | | Ammonia | | 17 | | 17 | | 17 | | 17 | |
| | Aqueous medium (b) | | Water | | 583 | | 583 | | 583 | | 583 | |
| Evaluation | | Tackifier | Softening point (°C) | | - | | 90 | | 100 | | 100 | |
| | | Binder composition | Nonvolatile content concentration (mass%) | | 40 | | 40 | | 40 | | 40 | |
| | | | Glass transition temperature (°C) | | 15 | | 15 | | 15 | | 15 | |
| | | Battery | Internal resistance (DCR) (Ω) | | 24 | | 30 | | 25 | | 25 | |
| | | | Discharge capacity retention rate after 500 cycles (%) | | 75 | | 70 | | 78 | | 76 | |

| | | | | | | | | | | | | |
|---|---|---|---|---|---|---|---|---|---|---|---|---|
| *1: The numerical values in the right columns of the monomer (a) indicate the content (mass%) of each monomer when the total amount of monomers was 100 parts by mass, and the numerical values in the right columns of the tackifier indicate the number of parts by mass of the tackifier when the total amount of monomers was 100 parts by mass. | | | | | | | | | | | | |

The polyoxyethylene alkyl ether sulfate ester salt (manufactured by Dai-Ichi Kogyo Seiyaku Co., Ltd., Aquaron KH-10) of the monomer (a4) shown in Tables 1 to 7 is a polymerizable surfactant.

Rongalite SFS as the polymerization initiator (e) is a trade name of Rongalite manufactured by Sumitomo Seika Chemicals Co., Ltd.

The tackifiers shown in Tables 1 to 7 are as follows.

### Hydrogenated petroleum resins

· Arkon M-90 (alicyclic saturated hydrocarbon resin): Manufactured by Arakawa chemical industries, Ltd., softening point of 90°C
· Arkon M-135 (alicyclic saturated hydrocarbon resin): Manufactured by Arakawa chemical industries, Ltd., softening point of 135°C
· Arkon P-90 (alicyclic saturated hydrocarbon resin): Manufactured by Arakawa chemical industries, Ltd., softening point of 90°C
· Arkon P-140 (alicyclic saturated hydrocarbon resin): Manufactured by Arakawa chemical industries, Ltd., softening point of 140°C
· Emulsion AM-1000-NT (alicyclic saturated hydrocarbon resin); Dispersion obtained by dispersing tackifier similar to Arkon M-90 in aqueous medium in water using surfactant (concentration of 50%); numerical values listed in Table 7 indicate amount of emulsified particles containing tackifier in dispersion; manufactured by Arakawa chemical industries, Ltd.; softening point of 100°C

### Rosin-based resin

· Hariester DS-70L (rosin ester resin): Manufactured by Harima Chemicals Group, Inc., softening point of 70°C
· Hariester FK-100 (disproportionated rosin ester resin): Manufactured by Harima Chemicals Group, Inc., softening point of 100°C

### Terpene-based resin

· YS Resin PX800 (polyterpene resin): Manufactured by Yasuhara Chemical Co., Ltd., softening point of 180°C
· YS Resin PX1000 (polyterpene resin): Manufactured by Yasuhara Chemical Co., Ltd., softening point of 100°C

The timing of addition shown in Tables 1 to 7 is the timing when a tackifier was used in the process of producing a binder composition. The term "before polymerization" means that the raw material monomer (a) was copolymerized in the presence of a tackifier. The term "after polymerization" means that a tackifier was added to an emulsion containing emulsified particles containing copolymers obtained by copolymerizing the raw material monomer (a).

The amount of ammonia as the basic substance (d) shown in Tables 1 to 7 was the amount (parts by mass) of ammonia contained in ammonia water.

The amount of water as the aqueous medium (b) shown in Tables 1 to 7 was the amount (parts by mass) of water contained in a binder composition for non-aqueous secondary batteries.

### <2. Evaluation of composite particles and binder composition for non-aqueous secondary batteries>

The glass transition temperature (Tg) was measured for each of the composite particles of Examples 1 to 18 and Comparative Examples 1 to 4 through a method shown below. The results are shown in Tables 1 to 7.

The nonvolatile content concentration was measured for each of the binder compositions for non-aqueous secondary batteries of Examples 1 to 18 and Comparative Examples 1 to 4 through a method shown below. The results are shown in Tables 1 to 7.

### [Glass transition temperature (Tg)]

A 2 mm thick film made of composite particles was obtained through a method of applying a binder composition for non-aqueous secondary batteries onto a release polyethylene terephthalate (PET) film and drying it at 50°C for 5 hours.

A square test piece of 2 mm in length and 2 mm in width was cut out from the obtained film. The test piece was sealed in an aluminum pan, and differential scanning calorimetry (DSC) measurement was performed on the above-described test piece using a differential scanning calorimeter (manufactured by Hitachi High-Tech Corporation, EXSTAR DSC/SS7020) at a temperature increase rate of 10°C/min in a nitrogen gas atmosphere. The temperature range for the DSC measurement was set to -40°C to 200°C. The peak top temperature of a DDSC chart obtained as the temperature derivative of DSC was measured and used as the glass transition temperature Tg (°C) of the composite particles.

### [Nonvolatile content concentration]

1 g of the binder composition for non-aqueous secondary batteries was weighed, placed on a 5 cm diameter aluminum plate, and placed in a dryer. The composition in the dryer was dried at 1 atmospheric pressure (1013 hPa) at a temperature of 105°C for 1 hour while being circulated, and the mass of remaining components was measured. The mass ratio (mass %) of the above-described components remaining after drying to the mass (1 g) of the binder composition for non-aqueous secondary batteries before drying was calculated and used as the nonvolatile content concentration (mass%).

### <3. Manufacture of non-aqueous secondary battery>

Using the binder compositions for non-aqueous secondary batteries of Examples 1 to 18 and Comparative Examples 1 to 4, negative electrodes were manufactured through the method shown below, and lithium ion secondary batteries, which are non-aqueous secondary batteries of Examples 1 to 18 and Comparative Examples 1 to 4, were manufactured using the manufactured negative electrodes.

### [Manufacture of Positive electrode]

A mixture was obtained by mixing 94 parts by mass of LiNi_{0.6}Mn_{0.2}Co_{0.2}O₂ as a positive electrode active material, 3 parts by mass of acetylene black as a conductive assistant, and 3 parts by mass of polyvinylidene fluoride as a binder. 50 parts by mass of N-methylpyrrolidone was added to the obtained mixture and further mixed to obtain a positive electrode slurry.

A 15-µm thick aluminum foil was prepared as a positive electrode current collector. A positive electrode slurry was applied onto both surfaces of the positive electrode current collector through a direct roll method. The amount of positive electrode slurry applied to the positive electrode current collector was adjusted so that the thickness after a roll press processing described below was 125 µm per surface.

The positive electrode slurry applied onto the positive electrode current collector was dried at 120°C for 5 minutes and pressed through a roll press method using a roll press device (manufactured by Thank Metal Co., Ltd., press load 5 t/cm, roll width 7 cm) to obtain a positive electrode sheet with positive electrode active material layers on both surfaces of the positive electrode current collector. The obtained positive electrode sheet was cut into a rectangle of 50 mm in length and 40 mm in width, and a conductive tab was attached thereto to obtain a positive electrode.

### [Manufacture of negative electrode (non-aqueous secondary battery electrode)]

96.9 parts by mass of artificial graphite (G49, manufactured by Jiangxi Zichen Technology Co., Ltd.) as a negative electrode active material, 3.6 parts by mass (1.4 parts by mass of a nonvolatile content (binder polymer)) of any of the binder compositions for non-aqueous secondary batteries manufactured in Examples 1 to 18 and Comparative Examples 1 to 4, and 60 parts by mass of a 2 mass% aqueous solution of carboxymethyl cellulose sodium salt (CMC, manufactured by Nippon Paper Chemicals Co., Ltd., Sunrose (registered trademark) MAC500LC) were mixed together, and 16 parts by mass of water was further added thereto and mixed using a rotation-revolution mixer (ARE-310, manufactured by Thinky Corporation) to obtain a negative electrode slurry (slurry for non-aqueous secondary battery electrodes).

A 10-µm thick copper foil was used as a negative electrode current collector. A negative electrode slurry was applied onto both surfaces of the negative electrode current collector through a direct roll method. The amount of negative electrode slurry applied to the negative electrode current collector was adjusted so that the thickness of each negative electrode active material layer after roll press processing described below was 170 µm per surface.

The negative electrode slurry applied on the negative electrode current collector was dried for 10 minutes at 90°C and pressed through the roll press method using a roll press device (manufactured by Thank Metal Co., Ltd., with a press load of 8 t/cm and a roll width of 7 cm). As a result, a negative electrode sheet having the negative electrode active material layers on both surfaces of the negative electrode current collector was obtained. The obtained negative electrode sheet was cut into a rectangle of 52 mm in length and 42 mm in width, and a conductive tab was attached thereto to obtain a negative electrode.

### [Manufacture of non-aqueous secondary battery]

The positive and negative electrodes were stacked so that a separator consisting of a polyolefin porous film (made of polyethylene, 25 µm thick) was interposed between the positive and negative electrodes, and a positive electrode active material layer and a negative electrode active material layer faced each other, and stored inside an exterior body (battery pack) made of an aluminum laminate material. Thereafter, a lithium ion secondary battery was obtained by pouring an electrolyte into the exterior body, performing vacuum impregnation, and packing with a vacuum heat sealer.

As the electrolyte, one obtained by mixing 1 part by mass of vinylene carbonate with 99 parts by mass of a solution of LiPF₆ at a concentration of 1.0 mol/L dissolved in a mixed solvent, which contains ethylene carbonate (EC), ethyl methyl carbonate (EMC), and diethyl carbonate (DEC) in a volume ratio of EC:EMC:DEC=30:50:20, was used.

### <4. Evaluation of non-aqueous secondary battery>

The internal resistance and discharge capacity retention rate after 500 cycles were evaluated for the lithium ion secondary batteries of Examples 1 to 18 and Comparative Examples 1 to 4 through the methods shown below. The results are shown in Tables 1 to 7.

### [Internal resistance (DCR)]

The internal resistance (DCR (Ω)) of each lithium ion secondary battery was measured at a temperature of 25°C according to the following procedure. That is, constant current charging was performed at 0.2 C from a rest potential until the voltage reached 3.6 V, so that the charge state was 50% of the initial capacity (50% SOC). Thereafter, discharge was performed at current values of 0.2 C, 0.5 C, 1 C, and 2 C respectively for 60 seconds. The internal resistance DCR (Ω) at 50% SOC was determined from the relationship between the voltage and these four current values (in 1 second).

### [Discharge capacity retention rate after 500 cycles]

Charging and discharging were performed at 45°C, and a series of operations in steps (i) to (iv) shown below was counted as one cycle. Time-integrated values of currents in steps (i) and (ii) were regarded as charge capacity, and a time-integrated value of a current in step (iv) was regarded as discharge capacity. Discharge capacity at the first cycle and discharge capacity at the 500th cycle were then measured, and the discharge capacity retention rate after 500 cycles was calculated according to the following equation.

Discharge capacity retention rate (%) = 100 × (discharge capacity at 500th cycle / discharge capacity at first cycle)

(i) Charge at a current of 1 C until the voltage reached 4.2 V (constant-current (CC) charging).
(ii) Charge at a voltage of 4.2 V until the current reached 0.05 C (constant-voltage (CV) charging).
(iii) Allow to stand for 30 minutes.
(iv) Discharge at a current of 1 C until the voltage reached 2.75 V (constant-current (CC) discharging).

### <5. Evaluation results>

As shown in Tables 1 to 7, it was possible to confirm that the lithium ion secondary batteries of Examples 1 to 18 all had a higher capacity retention rate compared to the lithium ion secondary batteries of Comparative Examples 1 to 4. It was inferred that this may be because the composite particles contained in the negative electrodes of the lithium ion secondary batteries of Examples 1 to 18 contained tackifiers shown in Tables 1 to 6 and copolymers containing structural units derived from the monomers (a1) and (a2) shown in Tables 1 to 6.

In more detail, in Comparative Example 1, a binder composition for non-aqueous secondary batteries, in which emulsified particles containing a copolymer were dispersed in an aqueous medium and no tackifier was contained, was used to produce the negative electrode. Therefore, it was inferred that the binding properties between electrode active materials and between an electrode active material and a current collector were insufficient, resulting in a poor capacity retention rate.

In addition, in Comparative Example 2, composite particles contained in the negative electrode contain a tackifier and a copolymer containing no structural unit derived from the monomer (a2). Therefore, it was inferred that the effect of improving the binding properties between electrode active materials and between an electrode active material and a current collector due to the copolymer was insufficient, resulting in a poor capacity retention rate.

Comparative Example 3 showed a poor capacity retention rate compared to Example 1 in which a negative electrode was manufactured using the same material as the raw material monomer (a) and a binder composition for non-aqueous secondary batteries containing the same amount of a similar tackifier. Comparative Example 4 showed a poor capacity retention rate compared to Example 18 in which a negative electrode was manufactured using the same material as the raw material monomer (a) and a binder composition for non-aqueous secondary batteries containing the same amount of a similar tackifier.

It was inferred that this may be because the binder compositions for non-aqueous secondary batteries used in Comparative Examples 3 and 4 were those obtained by adding a tackifier to an emulsion containing emulsified particles containing a copolymer obtained through copolymerizing the raw material monomer (a), and therefore, the copolymer and the tackifier were arranged apart from each other between electrode active materials and between an electrode active material and a current collector where an electrode was formed, resulting in insufficient binding properties between electrode active materials and between an electrode active material and a current collector.

In addition, as shown in Tables 1 to 7, it was possible to confirm that the lithium ion secondary batteries of Examples 1 to 18 and Comparative Examples 1 to 4 had a sufficiently low value practically from the viewpoint of internal resistance, which is a secondary effect.

### INDUSTRIAL APPLICABILITY

The present invention provides composite particles that can be used as a binder material that can form an electrode from which a non-aqueous secondary battery with excellent cycle characteristics can be obtained.

### REFERENCE SIGNS LIST

1 Copolymer
2 Tackifier
3 Particulate structure
4, 42 Surfactant
10, 11 Composite particles.
20 Copolymer particles

## Claims

1. Composite particles comprising:
a copolymer; and
a tackifier,
wherein the copolymer has
a first structural unit derived from a monomer (a1) and
a second structural unit derived from a monomer (a2),
wherein the monomer (a1) is a nonionic compound having only one ethylenically unsaturated bond, and
the monomer (a2) is a compound having a carboxy group and only one ethylenically unsaturated bond.

2. The composite particles according to claim 1,
wherein at least a part of the tackifier is present within a particulate structure consisting of chain molecules of the copolymer.

3. The composite particles according to claim 1,
wherein the tackifier is at least one kind selected from a hydrogenated petroleum resin and a terpene-based resin.

4. The composite particles according to claim 3,
wherein the tackifier includes the hydrogenated petroleum resin.

5. The composite particles according to claim 4,
wherein the softening point of the hydrogenated petroleum resin is 70°C to 140°C.

6. The composite particles according to claim 1,
wherein the content of the tackifier based on 100 parts by mass of monomer components used for producing the copolymer is 0.50 parts by mass to 20 parts by mass.

7. The composite particles according to claim 1,
wherein the content of the second structural unit in all structural units of the copolymer is 0.10 mass% to 20 mass%.

8. The composite particles according to claim 1,
wherein the copolymer has a third structural unit derived from a monomer (a3), and
wherein the monomer (a3) is a compound having a plurality of independent ethylenically unsaturated bonds.

9. The composite particles according to claim 8,
wherein the content of the third structural unit in all structural units of the copolymer is 0.010 mass% to 10 mass%.

10. The composite particles according to any one of claims 1 to 9, wherein the composite particles are used as a binder for non-aqueous secondary batteries.

11. A binder composition for non-aqueous secondary batteries, comprising:
the composite particles according to any one of claims 1 to 9; and
an aqueous medium.

12. A slurry for non-aqueous secondary battery electrodes, comprising:
the composite particles according to any one of claims 1 to 9;
an electrode active material; and
an aqueous medium,
wherein the aqueous medium is one selected from the group consisting of water, a hydrophilic solvent, and a mixture containing water and the hydrophilic solvent.

13. A non-aqueous secondary battery electrode, comprising:
the composite particles according to any one of claims 1 to 9.

14. A non-aqueous secondary battery, comprising:
the non-aqueous secondary battery electrode according to claim 13.

15. A method for producing composite particles, comprising:
a polymerization step of copolymerizing a raw material monomer (a) containing a monomer (a1) and a monomer (a2) in the presence of a tackifier,
wherein the monomer (a1) is a nonionic compound having only one ethylenically unsaturated bond, and
the monomer (a2) is a compound having a carboxy group and only one ethylenically unsaturated bond.
